# EUROPEAN PATENT SPECIFICATION

(11) **EP 1 810 994 B1**
(45) Date of publication and mention of the grant of the patent: **16.10.2013**
(21) Application number: 05795791.2
(22) Date of filing: 20.10.2005
(51) Int. Cl.: C08L 95/00, C08K 5/00, C08L 33/06, C08L 63/00, C08L 71/02, C08L 101/10, C09J 133/06, C09J 163/00, C09J 171/02, C09J 195/00, C09J 201/10, C09K 3/00, C09K 3/10, E01C 7/26, E04D 7/00, C08G 65/336, C08L 43/04

(54) **CURABLE COMPOSITION**
HÄRTBARE ZUSAMMENSETZUNG
PREPARATION DURCISSABLE

(30) Priority: 25.10.2004 JP 2004310129; 18.03.2005 JP 2005079291
(43) Date of publication of application: 25.07.2007
(73) Proprietor: Kaneka Corporation, Osaka 530-8288 (JP)
(72) Inventor: KAWAKAMI, Atsushi, Osaka 530-8288 (JP); ANDO, Katsuhiro, Hyogo 6740067 (JP)
(74) Representative: Vossius & Partner
(86) International application number: PCT/JP2005/019339
(87) International publication number: WO 2006/046472

(56) References cited:
- JP-A- 2001 055 307
- JP-A- 2002 338 683
- JP-A- 2004 161 889
- JP-A- 2004 292 611

## Description

The present invention relates to a curable composition comprising a natural asphalt and/or a petroleum asphalt, with a reactive silicon group-containing polyoxyalkylene polymer. The present invention also relates to an adhesive for tiles, a waterproof material, a road pavement material, a sealant and a damping material comprising such a curable composition.

Asphalt is excellent in tackiness, workability, waterproof property, and low in price. Thus, it is one of convenient materials, and widely used in the fields of road pavement materials, roofing materials, sealants, adhesives, canal lining materials, damping materials, soundproof materials and the like.

For example, upon using asphalt as a roofing material, so-called hot-applied asphalt waterproofing roofing method, comprising laminating a plurality of layers of asphalt to form a waterproofing layer has been widely used as the mainstream of waterproofing work. This method achieves high waterproofing reliability Nonetheless, the method has drawbacks in that, when asphalt is melted, significantly large amounts of fumes and odor generated from the molten asphalt seriously pollutes surrounding environment. Thus, the method has been avoided to apply in residential areas and central urban areas, and the applicable area has been limited. Moreover, workers also hate to perform this method considering the risk of burn injury.

To overcome these problems, an autohesion roofing method, which is one of cold roofing methods, has been developed and it is becoming established nowadays. However, in this method, a large amount of releasing paper peeled off during the working must be discarded, and this poses a serious problem.

As materials for roofing, blown asphalt produced through air blowing treatment is generally used. Considering the characteristic of asphalt, blown asphalt is, however, often brittle and easily cracks at low temperatures due to breaking of materials by the affection of ambient temperature or hardness of the material. On the contrary, such asphalt as exhibiting satisfactory properties at low-temperature sometimes exhibits intolerable fluidization or deformation in summer season. For overcoming such problems, epoxy resin-based asphalt materials and the like have been developed. The epoxy resin-based asphalt material has increased strength, and it contributes to decrease formation of furrows in summer season. However, such a drawback as crack generation in winter season has not yet been solved.

Recently, an attempt has been made for the purpose of suppressing crack generation. That is, a rubber modifier such as natural rubber, styrene/butadiene rubber and chloroprene rubber is added to impart elasticity for asphalt material (for example, see Patent Document 1). However these rubber modifiers has only poor compatibility with asphalt, so that it is difficult to provide a homogeneous composition containing the rubber modifier, and a long-time stirring under heating at a high temperature is required to disperse such modifiers requires. Thus, modification of asphalt using the rubber modifiers may not reach to expected degree. As a result, adhesiveness to the base material becomes insufficient and results in unsatisfactory waterproof/water-blocking performance.
[Patent Document 1] Japanese Patent Laid-Open No. 10-279808.

JP-2002-338683 discloses a modified silicon based sealant composed of an alkylene oxide polymer having silyl groups.

In JP-2004-161889 a polymer-modified asphalt elastic at normal temperature is disclosed.

JP-2004-292611 relates to a curable composition containing a crosslinkable hydrolysable silyl-group containing vinylic polymer.

EP 1062944 A1 discloses cosmetic materials containing a silicone compound.

### - Problems which the invention is to solve

The purpose of the present invention is to provide an ambient-temperature curable asphalt composition which produces neither fume nor odor upon application, cause no solvent volatilization, but has satisfactory water resistant adhesiveness to mortar.

### - Means for Solving the Problems

To solve the above-described problems, the present inventors have made intensive studies, and found that incorporation of a reactive silicon group-containing polyoxyalkylene polymer into natural asphalt and/or petroleum asphalt can give a curable composition capable of overcoming the above described problems.

More specifically, the present invention provides the following items (1) to (30).
(1) A curable composition, which comprises:
   (A) a natural asphalt and/or a petroleum asphalt,
   (B) a polyoxyalkylene polymer having one or more reactive silicon groups represented by the following general formula (1):

      -Si(R¹₃₋ₐ)Xₐ (1)

      in the formula, R¹ represents an alkyl group having 1 to 20 carbon atoms, an aryl group having 6 to 20 carbon atoms, an aralkyl group having 7 to 20 carbon atoms or a triorganosiloxy group represented by (R'O)₃Si-(wherein R' is a monovalent hydrocarbon group having 1 to 20 carbon atoms, and three R's may be the same or different) and they may be the same or different when two R¹s are present;
      X represents a hydroxy group or a hydrolyzable group, and they may be the same or different when two or more Xs are present; and
      a represents 1, 2 or 3,
      and (F) a tackifier resin wherein component (F) is at least one member selected from the group consisting of petroleum resins, rosin ester resins, terpene-type resins, styrene resins, xylene resins, and phenol resins.
(2) The curable composition according to the item (1),
   wherein the main chain skeleton of the (B) component is polyoxypropylene skeleton.
(3) The curable composition according to the item (1) or (2),
   wherein the introduction ratio (as determined by ¹H-NMR analysis) of the reactive silicon group to the molecular terminals of the (B) component is 60% or more, and the number average molecular weight (determined by GPC analysis on the basis of polystyrene standard) of the (B) component is 5,000 or more.
(4) The curable composition according to any one of the items (1) to (3), which comprises
   (G) a silane coupling agent.
(5) The curable composition according to the item (4),
   wherein the (G) component is a silane coupling agent containing one or more amino groups per molecule.
(6) The curable composition according to the item (3),
   wherein the introduction ratio (as determined by ¹H-NMR analysis) of the reactive silicon group to the molecular terminals of the (B) component is 75% or more.
(7) The curable composition according to the item (3),
   wherein the (B) component is a mixture composed of
   - a reactive silicon group-containing polyoxyalkylene polymer having an introduction ratio (as determined by ¹H-NMR analysis) of the reactive silicon group to the molecular terminals thereof of 75% or more and less than 85% and
   - a reactive silicon group-containing polyoxyalkylene polymer having an introduction ratio (as determined by ¹H-NMR analysis) of the reactive silicon group introduced into the molecular terminals thereof of 85% or more.
(8) The curable composition according to the item (3),
   wherein the introduction ratio (as determined by ¹H-NMR analysis) of the reactive silicon group to the molecular terminals of the (B) component is 85% or more.
(9) The curable composition according to the item (3),
   wherein the number average molecular weight (determined by GPC analysis on the basis of polystyrene standard) of the (B) component is 10,000 or more.
(10) The curable composition according to any one of the items (1) to (9),
   wherein the (B) component has one or more reactive silicon groups represented by the following general formula (2) and/or the following general formula (3) :

   -Si(R¹)X₂ (2)

   in the formula, R¹ and X are the same as described above, and

   -SiX₃ (3)

   in the formula, X is the same as described above.
(11) The curable composition according to any one of the items (1) to (10),
   wherein the (B) component has one or more functional groups represented by the following general formula (4):

   -NR²-C(=O)- (4)

   in the formula, R² is a hydrogen atom, an alkyl group having 1 to 20 carbon atoms, an aryl group having 6 to 20 carbon atoms, or an aralkyl group having 7 to 20 carbon atoms.
(12) The curable composition according to the item (11),
   wherein the (B) component has at least two functional groups represented by the general formula (4) per molecule.
(13) The curable composition according to any one of the items (1) to (12), which comprises:
   (C) a plasticizer.
(14) The curable composition according to the item (13),
   wherein the (C) component plasticizer is an aromatic oligomer or a completely or partially hydrogenated product of an aromatic oligomer.
(15) The curable composition according to the item (13),
   wherein the (C) component plasticizer is a sulfonate compound or a sulfonamide compound.
(16) The curable composition according to any one of the items (1) to (15), which comprises:
   (D) an epoxy resin.
(17) The curable composition according to (16), wherein the content of the (D) component epoxy resin is 5 to 120 parts by weight in relation to 100 parts by weight of the (A) component.
(18) The curable composition according to any one of the items (1) to (17), which comprises:
   (E) an alkyl (meth)acrylate polymer.
(19) The curable composition according to (18), wherein the molecular chain of the (E) component alkyl (meth)acrylate polymer is a copolymer chain comprising:
   - (a) an alkyl (meth)acrylate monomer unit having an alkyl group containing 1 to 8 carbon atoms and
   - (b) an alkyl (meth)acrylate monomer unit having an alkyl group containing 10 or more carbon atoms.
(20) The curable composition according to the item (18) or (19),
   wherein the (E) component alkyl (meth)acrylate polymer is a polymer having one or more reactive silicon groups represented by the above described general formula (1).
(21) The curable composition according to any of items (1) to (20),
   wherein the tackifier resin (F) is a tackifier resin modified with phenol and/or an alkylphenol.
(22) The curable composition according to any of items (1) to (21),
   wherein
   - the content of the (A) component is 30 to 60 parts by weight,
   - the content of the (B) components is 25 to 55 parts by weight,
   - the content of the (C) component is 15 to 50 parts by weight, and
   - the content of the (F) component is 1 to 30 parts by weight,
   based on 100 parts by weight of the sum of the contents of the (A), (B), (C) and (F) components.
(23) The curable composition according to any one of the items (1) to (22),
   wherein the content of asphaltene is 10 parts by weight or less per 100 parts by weight of the (A) component.
(24) The curable composition according to any one of the items (1) to (23),
   wherein a 3-mm thick sheet specimen obtainable by curing said curable composition at 23°C for 3 days and then at 50°C for 4 days has tensile strength at break of 0.4 MPa or more and an elongation at break of 50% or more measured in a tensile test according to JIS K 6251.
(25) A one-component curable composition, which comprises:
   the curable composition according to any one of the items (1) to (24).
(26) An adhesive for tiles, which comprises:
   the curable composition according to any one of the items (1) to (25).
(27) A waterproof material, which comprises:
   the curable composition according to any one of the items (1) to (25).
(28) A road pavement material, which comprises:
   the curable composition according to any one of the items (1) to (25).
(29) A sealant, which comprises:
   the curable composition according to any one of the items (1) to (25).
(30) A damping material, which comprises:
   the curable composition according to any one of the items (1) to (25).

### - Effect of the invention

The present invention provides a curable composition excellent in water resistance, curability and storage stability. Further, the curable composition of the present invention provides a curable composition applicable without melting by heating and free from fume and odor generation upon application.

The natural asphalt and/or the petroleum asphalt used as the (A) component in the present invention is natural asphalts such as lake asphalts including Trinidad epure, gilsonite and pyrobitumen; and such as rock asphalts; cutback asphalts containing these natural asphalts; and petroleum asphalts such as straight asphalts produced in oil refining process and blown asphalts. The (A) component may be a mixture with substances such as petroleum process oil such as heavy catalytically cracked cycle oil, light catalytically cracked cycle oil, lubricating oil, a distillate thereof, or another distillate subjected to treatment such as extraction, refinement, hydrogenation, or the like. A mixture of these may also be used. In particular, a straight asphalt produced in oil refining process is preferable because it is compatible with the (B) component or can attain stable dispersibility in the (B) component. Moreover, the content of asphaltene, which is one of the ingredients of asphalt, is preferably 10 parts by weight or less in 100 parts by weight of asphalt.

The content of asphaltene in the asphalt component may be measured in accordance with a composition analysis method of asphalt using column chromatography (Japan Petroleum Institute Standard, JPI-5S-22-83).

Coal tar produced in the coal refining process is classified into the bitumen in a similar manner to the above described asphalts, but it is not preferable because it contains harmful benzopyrene and generates odor upon working therewith.

As the main chain skeleton of the (B) reactive silicon group-containing polyoxyalkylene polymer, mentioned may be a main chain skeleton essentially having a repeating unit represented by the general formula (5):

-R³-O- (5)

wherein R³ is a divalent organic group, and represents a straight-chain or branched alkylene group having 1 to 14 carbon atoms.

Specific examples of such a repeating unit represented by the general formula (5) include -CH₂CH₂O-, -CH(CH₃)CH₂O-, -CH(C₂H₅)CH₂O-, -C(CH₃)₂CH₂O-, and -CH₂CH₂CH₂CH₂O-.

The main chain skeleton of the polyoxyalkylene polymer may be constituted of only one type of repeating unit or of two or more types of repeating units. In particular, the -CH(CH₃)CH₂O- repeating unit is preferable because the polyoxypropylene constituted of this repeating unit is amorphous, and this repeating unit can make viscosity of a polymer lower to an appropriate extent and can give an appropriate flexibility to a cured product.

Examples of synthesis methods of the polyoxyalkylene polymer include a polymerization method with an alkaline catalyst such as KOH; a polymerization method with a transition metal compound-porphyrin complex catalyst such as a catalyst prepared by reacting an organoaluminum compound with porphyrin, (as disclosed in Japanese Patent Laid-Open No. 61-215623); polymerization methods with double metal cyanide complex catalysts, (as disclosed in Japanese Patent Publication Nos. 46-27250 and 59-15336, and U. S. Patent Nos. 3,278,457, 3,278,458, 3,278,459, 3, 427, 256, 3, 427, 334, and 3,427,335); a polymerization method using a catalyst composed of a polyphosphazene salt (as disclosed in Japanese Patent Laid-Open No. 10-273512); and a polymerization method using a catalyst composed of a phosphazene compound (as disclosed in Japanese Patent Laid-Open No. 11-060722). However, methods applicable for the present invention are not limited to these methods.

The reactive silicon group in the (B) reactive silicon group-containing polyoxyalkylene polymer is a group having one or more hydroxy or hydrolyzable groups bonded to the silicon atom thereof and is capable of forming siloxane bonds by a reaction catalyzed with a silanol condensation catalyst. As the reactive silicon group, a functional group represented by the following general formula (1) may be mentioned:

-Si(R¹₃₋ₐ)Xₐ (1)

in the formula, R¹ represents an alkyl group having 1 to 20 carbon atoms, an aryl group having 6 to 20 carbon atoms, an aralkyl group having 7 to 20 carbon atoms, or a triorganosiloxy group represented by (R')₃OSi-(wherein R' is a monovalent hydrocarbon group having 1 to 20 carbon atoms, and three R's may be the same or different) and they may be the same or different when two R¹s are present;
X represents a hydroxy or a hydrolyzable group; and they may be the same or different when two or more Xs are present; and
a represents 1, 2 or 3.

When X or Xs in the above described general formula (1) is/are hydrolyzable group(s), it is or they are not particularly limited and may be any hydrolyzable groups well known in the art. Specific examples of such hydrolyzable groups include a hydrogen atom, a halogen atom, an alkoxy group, an acyloxy group, ketoxymato group, an amino group, an amido group, an acid amido group, an aminooxy group, a mercapto group and alkenyloxy group. Among these groups, particularly preferable are alkoxy groups such as a methoxy group, an ethoxy group, a propoxy group and an isopropoxy group from the viewpoints of moderate hydrolyzability and easy handleability.

In the general formula (1), R¹ is not particularly limited, and may be such groups as well known in the art; specific examples include alkyl groups such as a methyl group, an ethyl group, a propyl group and an isopropyl group; aryl groups such as a phenyl group; and aralkyl groups such as a benzyl group. Among these groups, a methyl group is particularly preferable from the viewpoint of raw material availability.

The reactive silicon group represented by the general formula (1) is not particularly limited and may be such groups as well known in the art; specific examples include a methyldimethoxysilyl group, a methyldiethoxysilyl group, a methyldiisopropoxysilyl group, a trimethoxysilyl group, a triethoxysilyl group and a triisopropoxysilyl group.

Introduction of the reactive silicon group into a polyoxyalkylene polymer may be carried out on the basis of methods well known in the art. For example, the following methods may be mentioned.
(a) An organic polymer having in the molecule a functional group such as hydroxy group is allowed to react with an organic compound having both an active group reactive with the functional groups and an unsaturated group, to yield an unsaturated group-containing organic polymer. Alternatively, monomers having unsaturated groups that does not involved in the polymerization reaction is copolymerized with an epoxide to give an unsaturated group-containing organic polymer. For example, unsaturated group-containing epoxides are subjected to ring-opening copolymerization upon ring-opening polymerization of epoxides to produce an organic polymer, to give such an unsaturated group-containing organic polymer. Then, a reactive silicon group-containing hydrosilane is reacted with the resultant product to cause hydrosilylation.
(b) A compound both containing mercapto group and reactive silicon group is reacted with an unsaturated group-containing organic polymer that has been obtained in the same manner as the method described in (a).
(c) An organic polymer having in the molecule functional groups such as hydroxy group, epoxy group and isocyanato group is reacted with a compound having both a functional group reactive with such functional groups and a reactive silicon group.

Among the above described methods, the method (a) or (c) is preferable because an organic polymer obtained by the method (b) has strong odor due to mercaptosilane.

Among the methods belonging to the method (c), preferable is a method comprising the step of reacting a hydroxy group-terminated polymer with a compound containing both isocyanato group and reactive silicon group because such a method attains a high conversion rate even in a relatively short reaction time. The oxyalkylene polymer obtained by such a reaction is a polymer having, in addition to the reactive silicon group, a group represented by the following general formula (4):

-NR²-C(=O)- (4)

wherein R² represents a hydrogen atom, an alkyl group having 1 to 20 carbon atoms, an aryl group having 6 to 20 carbon atoms or an aralkyl group having 7 to 20 carbon atoms.

The (B) component having the group represented by the general formula (4) can be obtained by other methods than the methods described above. Specifically, products having two or more group represented by the general formula (4) are obtained by chain-elongation reaction between polyols having the repeating units represented by the general formula (5) and diisocyanate compounds, for example, aromatic polyisocyanates such as toluene (tolylene) diisocyanate, diphenylmethane diisocyanate and xylene diisocyanate, and aliphatic polyisocyanates such as isophorone diisocyanate and hexamethylene diisocyanate, irrespective of methods for introducing the reactive silicon group.

As for the method for introducing the reactive silicon group, the method (a) and the method (c) have both merits and demerits. A reactive silicon group-containing organic polymer obtained by the method (a) is preferable in that it gives a composition having lower viscosity and better workability than that comprising a polymer obtained by the method (c). On the other hand, the method (c) is preferable in that it can introduce a silyl group into a hydroxy group-containing polymer in a one-step manner, and accordingly, can prepare the (B) component with better productivity.

The number of the group represented by the general formula (4) is preferably one or more per molecule, and more preferably two or more per molecule.

In the method (a), for the purpose of introducing the reactive silicon group with a higher introduction ratio, the introduction is preferably carried out by addition of a hydrosilane compound to an organic polymer having an unsaturated group represented by CH₂=C(R⁴)-CH₂- or CH(R⁴)=CH₂-CH₂- (where R⁴ represents a hydrogen atom or a hydrocarbon group having 1 to 10 carbon atoms). More preferably, R⁴ is a hydrogen atom or a methyl group. To achieve 85% or more of the introduction ratio of the reactive silicon group, it is particularly important for R⁴ to be a methyl group.

Specific examples of such a hydrosilane compound used in the method (a) include halogenated silanes such as trichlorosilane, methyldichlorosilane, dimethylchlorosilane and phenyldichlorosilane; alkoxysilanes such as trimethoxysilane, triethoxysilane, methyldiethoxysilane, methyldimethoxysilane and phenyldimethoxysilane; acyloxysilanes such as methyldiacetoxysilane and phenyldiacetoxysilane; and ketoximatosilanes such as bis(dimethylketoximato)methylsilane and bis(cyclohexylketoximato)methylsilane. The hydrosilane compound, however, is not limited to these compounds. Among these examples, halogenated silanes and alkoxysilanes are particularly preferable. In particular, alkoxysilanes are most preferable because the obtained compositions are moderately hydrolyzable and easily handleable.

Examples of the synthesis method (b) include a method comprising the step of introducing a compound containing both mercapto group and a reactive silicon group into the sites on the unsaturated bonds of an organic polymer by means of a radical addition reaction in the presence of a radical initiator and/or a radical generating source. However, the synthesis method is not limited to these methods. Nonlimiting examples of such a compound having both mercapto group and a reactive silicon group include
γ-mercaptopropyltrimethoxysilane,
γ-mercaptopropylmethyldimethoxysilane,
γ-mercaptopropyltriethoxysilane and
γ-mercaptopropylmethyldiethoxysilane.

Among the methods belonging to the above category (c), examples of such a method comprising the step of reacting a hydroxy group-terminated polymer with a compound containing both isocyanato group and a reactive silicon group include a method as disclosed in Japanese Patent Laid-Open No. 3-47825. The method is not limited to these methods, however. Nonlimiting examples of such a compound containing both isocyanato group and a reactive silicon group compound include
γ-isocyanatopropyltrimethoxysilane,
γ-isocyanatopropylmethyldimethoxysilane,
γ-isocyanatopropyltriethoxysilane, and
γ-isocyanatopropylmethyldiethoxysilane; however, the compound is not limited to these compounds.

The (B) component may be a straight chain form or may have branches. The number average molecular weight of the (B) component, determined by gel permeation chromatography (GPC) on the basis of polystyrene standard, is preferably 3,000 or more, and practically 100,000 or less. It is more preferably 5,000 or more and 70,000 or less, and still more preferably 10,000 or more and 50,000 or less. If the number average molecular weight is less than 5,000, hardness of the composition tends to be high and may cause adverse effect. On the contrary, if the number average molecular weight exceeds 70,000, viscosity of the composition tends to become high and may cause adverse effect.

The reactive silicon groups in the (B) component may be bonded to the terminals or to the inner portion of the polyoxyalkylene polymer, or both to the terminals and the inner portion. Particularly, reactive silicon groups bonded only to the molecular terminals are preferable, since networks of polymer components in the composition would be efficiently constructed, and hence sufficient networks be are formed even by a small amount of the reactive silicon group.

The introduction ratio of the reactive silicon group in the (B) component may be determined from the integrated value of ¹H-NMR spectral intensity of the terminals into which the reactive silicon groups are introduced, although various other way for determine the ratio exists. The introduction ratio of the reactive silicon group means the percentage calculated by dividing the number of the reactive silicon groups present in the molecule by the number of the molecular terminals, followed by multiplying 100. That is, the introduction ratio is 100% if a straight chain polymer (namely a polymer having two molecular terminals) has two reactive silicon groups per molecule on average. Accordingly, calculated value of the introduction ratio may exceed 100% for a polymer having many reactive silicon groups on the sites other than molecular terminals.

The introduction ratio of the reactive silicon group in the (B) component is preferably 60% or more, more preferably 75% or more, and furthermore preferably 85% or more. If the introduction ration is less than 60%, crosslinking of the (B) component in the curable composition of the present invention may become insufficient. As a result, strength of cured product prepared from the composition may insufficient. Also recommended is an embodiment using an admixture composed of a polymer having an introduction ratio of the reactive silicon group of 85% or more and another polymer having an introduction ratio of 75% or more and less than 85%.

The number of the reactive silicon groups per molecule of the (B) component polymer is preferably on average one or more, and preferably 1.1 to 5. If the number of the reactive silicon groups in the molecule is less than 1, curability of the cured product may become insufficient, and satisfactory rubber elasticity may not be attained. On the other hand, if the number of the groups exceeds 5, cured products may become hard and brittle, and rubber elasticity of the cured product may become poor. Thus, it is not preferable.

The used amount of the (B) component is 10 to 500 parts by weight, more preferably 10 to 300 parts by weight, and particularly preferably 30 to 200 parts by weight, in relation to 100 parts by weight of the (A) component.

The reactive silicon group represented by the general formula (1) has one to three hydroxy groups or hydrolyzable groups represented by X. But curability tends to be insufficient if the reactive silicon group has only one hydroxy or hydrolyzable group. Therefore, preferable is a reactive silicon group represented by the following general formula (2) or (3) :

-Si (R¹) X₂ (2)

where R¹ and Xs are the same as described above,

-SiX₃ (3)

where Xs are the same as described above.

Particularly, it is preferable to use, as the (B) component, a polymer having one or more reactive silicon groups represented by the general formula (3) in the case that high curability is required for the curable composition and/or the case that creep resistance is required for the cured product.

The plasticizer (C) usable in the present invention is not limited and a known plasticizer can be used. Specific examples of such plasticizer (C) include phthalates such as dibutyl phthalate, diheptyl phthalate, di(2-ethylhexyl) phthalate, butyl benzyl phthalate, di-n-octyl phthalate, diisononyl phthalate, diisodecyl phthalate and diundecyl phthalate; nonaromatic dibasic acid esters such as di(2-ethylhexyl) adipate, di-n-octyl adipate, diisononyl adipate, diisodecyl adipate, di(2-ethylhexyl) sebacate and di-2-ethylhexyl tetrahydrophthalate; process oils such as paraffin base oil, naphthene base oil and aroma base oil; fatty acid oils such as flaxseed oil, soybean oil and tung oil; aromatic esters such as tri-2-ethylhexyl trimellitate and triisodecyl trimellitate; fatty acid esters such as butyl oleate, methyl acetyl ricinoleate and pentaerythritol ester; polyvinyl oligomers such as polybutene, hydrogenated polybutene and hydrogenated α-olefin oligomer; hydrogenated polybutadiene oligomers such as hydrogenated liquid polybutadiene; paraffins such as paraffin oil and chlorinated paraffin oil; cycloparaffins such as naphthene oil; aromatic oligomers such as biphenyl and triphenyl; completely or partially hydrogenated aromatic oligomers; sulfonate compounds such as phenyl alkylsulfonate; and sulfonamide compounds such as toluene sulfonamide, N-ethyltoluene sulfonamide, and N-cyclohexyltoluene sulfonamide. These compounds may be used each alone or in combination of two or more thereof.

Addition of the plasticizer (C) makes viscosity of the composition lower and workability better. Aromatic oligomers, completely or partially hydrogenated aromatic oligomers, sulfonate compounds, and sulfonamide compounds are preferable since they tend to notably increase dispersion stability of the (A) component and the (B) component.

When the composition contains the (C) component, the content of the (C) component is preferably 5 to 300 parts by weight, more preferably 10 to 200 parts by weight, and most preferably 25 to 120 parts by weight in relation to 100 parts by weight of the (A) component. If the content is less than 5 parts by weight, effect of decreasing viscosity of the composition, and improvement of compatibility and dispersibility between the (A) and (B) components may sometimes be insufficient. If the content exceeds 300 parts by weight, mechanical properties may sometimes be insufficient.

To the curable composition of the present invention, the epoxy resin (D) may be added according to need. Addition of an epoxy resin would contribute to increase strength of the cured product, and to prevent formation of furrows in summer season. Improvement of water resistant adhesiveness to substrates such as mortar is also expected. Examples of such epoxy resin (D) include epichlorohydrin-bisphenol A-type epoxy resins, epichlorohydrin-bisphenol F-type epoxy resins, flame resistant epoxy resins such as glycidyl ether of tetrabromobisphenol A, novolac-type epoxy resins, hydrogenated bisphenol A-type epoxy resins, glycidyl ether epoxy resins of bisphenol A propyleneoxide adduct, p-oxybenzoic acid glycidyl ether ester-type epoxy resins, m-aminophenol epoxy resins, diaminodiphenylmethane epoxy resins, urethane modified epoxy resins, various alicyclic epoxy resins, N,N-diglycidylaniline, N,N-diglycidyl-o-toluidine, triglycidyl isocyanurate, polyalkylene glycol diglycidyl ether, glycidyl ethers of polyhydric alcohols such as glycerin, hydantoin-type epoxy resins and epoxidized substances of unsaturated polymers such as petroleum resins. However, the epoxy resin is not limited to these examples, and commonly used epoxy resins may also be used. Epoxy resins having at least two epoxy groups per molecule are preferable because such epoxy resins have high reactivity upon curing, and easily forms three-dimensional networks in cured products. Examples of further preferable epoxy resins include bisphenol A-type epoxy resins or novolac-type epoxy resins.

When the (D) component is added to the composition, content of the (D) component is preferably 5 to 120 parts by weight, more preferably 5 to 100 parts by weight, and most preferably 20 to 100 parts by weight in relation to 100 parts by weight of the (A) component. If the content of the (D) component exceeds 120 parts by weight, storage stability tends to be insufficient. On the other hand, if the content is less than 5 parts by weight, the purpose of addition of the (D) component to improve strength may not be achieved.

If the epoxy resin (D) is added to the composition of the present invention, a curing agent to cure the epoxy resin may be used in combination. Usable epoxy resin curing agents are not particularly limited, and epoxy resin curing agents well known in the art can be used. Specific examples of such epoxy resin curing agents include primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophorone diamine, and amino-terminated polyether; tertiary amines such as 2,4,6-tris(dimethylaminomethyl)phenol and tripropylamine, and salts of the tertiary amines; polyamide resins; imidazoles; dicyandiamides; borontrifluoride complexes; carboxylic acid anhydrides such as phthalic anhydride, hexahydrophthalic anhydride, tetrahydrophthalic anhydride, dodecynylsuccinic anhydride, pyromellitic anhydride and chlorendic anhydride; alcohols; phenols; carboxylic acids; and diketone complexes of aluminum or zirconium. However, the epoxy resin curing agent is not limited to these examples. The curing agents may be used either each alone or in combination of two or more thereof.

When an epoxy resin curing agent is used, the content of the curing agent is preferably 0.1 to 300 parts by weight in relation to 100 parts by weight of the epoxy resin.

As an epoxy resin curing agent, a ketimine compound can be used. A ketimine compound is stable in a moisture free condition, and is decomposed into primary amines and ketones by water. The primary amines thus produced can serve as room-temperature curing agents for epoxy resins. Use of a ketimine compound makes it possible to produce a one-component composition. Such a ketimine compound may be obtained by condensation reaction between an amine compound and a carbonyl compound.

For synthesizing a ketimine compound, an amine compound and a carbonyl compound well known in the art may be used. Examples of such an amine compound include diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine and p,p'-biphenylenediamine; polyamines such as 1,2,3-triaminopropane, triaminobenzene, tris(2-aminoethyl)amine and tetra(aminomethyl)methane; polyalkylenepolyamines such as diethylenetriamine, triethylenetriamine and tetraethylenepentamine; polyoxyalkylene polyamines; and aminosilanes such as γ-aminopropyltriethoxysilane, N-(β-aminoethyl)-γ-aminopropyltrimethoxysilane and N-(β-aminoethyl)-γ-aminopropylmethyldimethoxysilane. Examples of such a carbonyl compound include aldehydes such as acetoaldehyde, propionaldehyde, n-butylaldehyde, isobutylaldehyde, diethylacetoaldehyde, glyoxal and benzaldehyde; cyclic ketones such as cyclopentanone, trimethylcyclopentanone, cyclohexanone and trimethylcyclohexanone; fatty ketones such as acetone, methyl ethyl ketone, methyl propyl ketone, methyl isopropyl ketone, methyl isobutyl ketone, diethyl ketone, dipropyl ketone, diisopropyl ketone, dibutyl ketone and diisobutyl ketone; and β-dicarbonyl compounds such as acetylacetone, methyl acetoacetate, ethyl acetoacetate, dimethyl malonate, diethyl malonate, methyl ethyl malonate and dibenzoylmethane.

When an imino group is present in the ketimine compound, the imino group may be reacted with styrene oxide, or glycidyl ethers such as butyl glycidyl ether or allyl glycidyl ether, or glycidyl esters. These ketimine compounds may be used each alone or in combination of two or more thereof. These ketimine compounds are used within a range of 1 to 100 parts by weight in relation to 100 parts by weight of the epoxy resin (D), and the amount of the ketimine compounds to be used is varied depending on the type of the epoxy resin and the type of the ketimine compound.

In the curable composition of the present invention, an alkyl (meth)acrylate polymer (E) may be incorporated. The "alkyl (meth)acrylate polymer" means a polymer, whose main monomer components are/is an alkyl methacrylate and/or an alkyl acrylate represented by the following general formula (6):.

CH₂=C(R⁵)COOR⁶ (6)

where R⁵ represents a hydrogen atom or a methyl group, and R⁶ represents an alkyl group having 1 to 30 carbon atoms. And it is to be understood as a polymer of a single monomer or a copolymer of two or more of the monomers. Incorporation of this alkyl (meth)acrylate polymer (E) in the curable composition of the present invention would contribute to improvement of adhesiveness and weather resistance of the composition.

Examples of R⁶ in the general formula (6) include a methyl group, an ethyl group, a propyl group, an n-butyl group, a tert-butyl group, a 2-ethylhexyl group, a nonyl group, a lauryl group, a tridecyl group, a cetyl group, a stearyl group and a behenyl group. The monomers represented by the general formula (6) may be used each alone or admixtures of two or more thereof.

When two or more monomers are used, use of a combination of a monomer (a) in which R⁶ in the general formula (6) has 1 to 8 carbon atoms and a monomer (b) in which R⁶ in the general formula (6) has 10 or more carbon atoms is preferable since control of compatibility of the curable composition may be easier by regulating proportions of the above monomers.

Specific examples of an alkyl (meth)acrylate monomer include methyl (meth)acrylate, ethyl (meth)acrylate, n-propyl (meth)acrylate, n-butyl (meth)acrylate, isobutyl (meth)acrylate, tert-butyl (meth)acrylate, n-hexyl (meth)acrylate, heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, myristyl (meth)acrylate, cetyl (meth)acrylate, stearyl (meth)acrylate, and behenyl (meth)acrylate.

The molecular chain of the (E) component is substantially constituted of one or more types of alkyl (meth)acrylate monomer units. The term "substantially constituted of" as referred to here means that the proportion of the alkyl (meth)acrylate monomer units in the (E) component exceeds 50 wt%, and is preferably 70 wt% or more. The (E) component may contain, in addition to alkyl (meth)acrylate monomer units, such monomer units as copolymerizable with these monomer units. Examples of such copolymerizable monomer units include carboxylic acid group-containing monomers such as (meth) acrylic acid; amide group-containing monomers such as (meth)acrylamide and N-methylol(meth)acrylamide; epoxy group-containing monomers such as glycidyl (meth)acrylate; and amino group-containing monomers such as diethylaminoethyl(meth)acrylate and aminoethyl vinyl ether. Improvement of moisture curability or inner-part curability is expected by copolymerizing these monomers. Examples of such monomers also include the monomer units derived from acrylonitrile, styrene, α-methylstyrene, alkyl vinyl ethers, vinyl chloride, vinyl acetate, vinyl propionate and ethylene.

The (E) component polymer may comprise a reactive silicon group represented by the following general formula (1):

-Si(R¹₃₋ₐ)Xₐ (1)

where R¹ represents an alkyl group having 1 to 20 carbon atoms, an aryl group having 6 to 20 carbon atoms, an aralkyl group having 7 to 20 carbon atoms or a triorganosiloxy group represented by (R'O)₃Si-; when two R¹s are present, they may be the same or different; R' is a monovalent hydrocarbon group having 1 to 20 carbon atoms, and three R's may be the same or different; X represents a hydroxy group or a hydrolyzable group; when two or more Xs are present, they may be the same or different; and a represents 1, 2 or 3.

As an example of a method for introducing the reactive silicon groups into the (E) component polymer, there may be mentioned a method comprising copolymerizing a compound having both a polymerizable unsaturated bond and a reactive silicon group with an alkyl (meth)acrylate monomer unit. Examples of such a compound having both a polymerizable unsaturated bond and a reactive silicon group include a monomer represented by the general formula (7) and/or the general formula (8):

CH₂=C(R⁵)COOR⁷-Si(R¹₃₋ₐ)Xₐ (7)

where R⁵ is the same as described above; R⁷ represents a divalent alkylene group having 1 to 6 carbon atoms; R¹, X and a are the same as described above,

CH₂=C(R⁵)-Si(R¹₃₋ₐ)Xₐ (8)

where R⁵, R¹, X and a are the same as described above.

Monomers well known in the art may be used as the monomer represented by the general formula (7) and/or the general formula (8). Specific examples of such monomers include
γ-methacryloxypropylpolyalkoxysilanes such as
γ-methacryloxypropyltrimethoxysilane,
γ-methacryloxypropylmethyldimethoxysilane, and
γ-methacryloxypropyltriethoxysilane;
γ-acryloxypropylpolyalkoxysilanes such as
γ-acryloxypropyltrimethoxysilane,
γ-acryloxypropylmethyldimethoxysilane, and
γ-acryloxypropyltriethoxysilane; and
vinylalkylpolyalkoxysilanes such as
vinyltrimethoxysilane, vinylmethyldimethoxysilane, and vinyltriethoxysilane.

The (E) component can be obtained by means of a common vinyl polymerization method, such as a solution polymerization method based on radical reaction. The polymerization is usually carried out by reacting the above described monomer with a radical initiator and a chain transfer agent at 50 to 150°C. In this case, the molecular weight distribution becomes larger than 1.8.

Examples of such an radical initiators include azo initiators such as 2,2'-azobisisobutyronitrile, 2,2'-azobis(2-methylbutyronitrile), 4,4'-azobis(4-cyanovaleric)acid, 1,1'-azobis(1-cyclohexanecarbonitrile), azobisisobutyric acid amidine hydrochloride salt, 2,2'-azobis(2,4-dimethylvaleronitrile); and organic peroxide initiators such as benzoyl peroxide and di-tert-butyl peroxide. Azo initiators are preferably used because such initiators are less susceptive to the solvents used for polymerization and have low risk for explosion.

Examples of such a chain transfer agent include mercaptans such as n-dodecylmercaptan, tert-dodecylmercaptan, laurylmercaptan, γ-mercaptopropyltrimethoxysilane, γ-mercaptopropylmethyldimethoxysilane, γ-mercaptopropyltriethoxysilane, and γ-mercaptopropylmethyldiethoxysilane; and halogen-containing compounds.

The polymerization may be carried out in a solvent. Preferable examples of such a solvent include unreactive solvents such as ethers, hydrocarbons and esters.

Preferred example of the (E) component is one having a number average molecular weight of 500 to 100,000 measured by GPC relative to polystyrene standard from the viewpoint of easy handleability. More preferred one as the (E) component is one having a number average molecular weight of 1,500 to 30,000 measured by GPC relative to polystyrene standard in view of satisfactory weather resistance and workability of the cured product.

If the (E) component is used, the weight ratio between the amounts of the (B) and (E) components is preferably such that (B)/(E)=(95/5) to (10/90), and more preferably (80/20) to (60/40).

The proportion of the total amount of the (B) and (E) components in relation to the (A) component is preferably 10 to 500 parts by weight, more preferably 10 to 300 parts by weight, and particularly preferably 30 to 200 parts by weight, in relation to 100 parts by weight of the (A) component.

A tackifier resin (F) to be used in the present invention is not particularly limited and any known one can be used. Specific examples thereof include petroleum resins such as aliphatic petroleum resins (C-5 resins), aromatic petroleum resins (C-9 resins), aliphatic/aromatic mixed petroleum resins (C-5/C-9 resins), phenol-modified C-5/C-9 resins, and dicyclopentadiene petroleum resins; rosin ester resins such as ester compounds of rosin acid, disproportionated rosin acid, hydrogenated rosin acid or polymerized rosin acid with glycerol or pentaerythritol; terpene-type resins such as terpene resins, hydrogenated terpene resins, aromatically modified terpene resins, aromatically modified hydrogenated terpene resins, phenol-modified terpene resins (terpene phenol resins), alkylphenol-modified terpene resins; styrene resins; xylene resins such as xylene resin, phenol-modified xylene resins, and alkylphenol-modified xylene resins; phenol resins such as novolac-type phenol resins, resol-type phenol resins, alkylphenol resins, rosin-modified phenol resins, cashew oil-modified phenol resins, and tall oil-modified phenol resins; and modified resins produced by modifying these resins with epoxy resins and acryl monomers. These may be used alone or in combination as a mixture of two or more of these resins if necessary. In particular, resins modified with phenol or an alkylphenol are preferably used so that compatibility and dispersion stability between the (A) component and the (B) component can be improved.

If the (F) component is used, the amount thereof is 5 to 100 parts by weight, more preferably 5 to 30 parts by weight, and particularly preferably 5 to 20 parts by weight, in relation to 100 parts by weight of the (B) component. If the amount of the (F) component is less than 5 parts by weight, improvement of compatibility and dispersibility between the (A) and (B) components may become insufficient. On the contrary, the amount of the (F) component exceeds 100 parts by weight, viscosity becomes high and workability becomes degraded.

On the basis of the sum of the contents of the (A), (B), (C) and (F) components as 100 parts by weight, more preferable is a case in which the content of the (A) component is 30 to 60 parts by weight, the content of the (B) component is 25 to 55 parts by weight, the content of the (C) component is 15 to 50, and the content of the (F) component is 2 to 30 parts by weight from the viewpoints of compatibility and dispersibility between the (A) and (B) components.

The curable composition of the present invention may further contain a silane coupling agent (G) according to purposes. Specific examples of such a silane coupling agent include isocyanato group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, and (isocyanatomethyl)dimethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(2-(2-aminoethyl)aminoethyl)aminopropyltrimethoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and N,N'-bis[3-(trimethoxysilyl)propyl]ethylenediamine; ketimine-type silanes such as N-(1,3-dimethylbutylidene)-3-(triethoxysilyl)-1-propaneamine; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane; vinyl-type unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; and isocyanurate silanes such as tris(trimethoxysilyl)isocyanurate. Condensates obtained by partial condensation of the above described silanes can also be used. Moreover, the following derivatives obtained by modifying these silanes can also be used as such a silane coupling agents. Amino-modified silyl polymer, silylated aminopolymer, unsaturated aminosilane complexes, phenylamino-long chain alkylsilane, aminosilylated silicone and silylated polyester.

From the viewpoint of adhesiveness to porous materials such as mortar or concrete, silanes containing one or more amino groups per molecule are preferable.

If a silane coupling agent is used in the present invention, the silane coupling agent is used usually in an amount within the range from 0.1 to 20 parts by weight, and in particular, preferably in a range from 0.5 to 10 parts by weight, in relation to 100 parts by weight of the reactive silicon group-containing polymer (B).

The curable composition of the present invention is preferably regulated for use in such a way that a resulting cured product has the following properties.

More specifically, the curable composition is at first molded to 3 mm-thick sheet specimen by curing at 23°C for 3 days and subsequently at 50°C for 4 days. In this case, preferred as a cured product is one having tensile strength at break of 0.4 MPa or more and elongation at break of 50% or more measured by elongation test in accordance with JIS K 6251. It is preferable to regulate the curable composition to give such a cured product.

Such regulation can be attained by the blending as described above. Additionally, such a regulation can also be attained by addition of the components described below according to need.

According to need, a silanol condensation catalyst, a filler, a thixotropic agent, an age resistor, or other various additives may further be added to the curable composition of the present invention.

Such a silanol condensation catalyst is not particularly limited, and silanol condensation catalysts well known in the art may be used. Specific examples of such a silanol condensation catalyst include titanate such as tetrabutyl titanate and tetrapropyl titanate; organotin compounds such as dibutyltin dilaurate, dibutyltin maleate, dibutyltin diacetate, tin octylate, tin naphthenate, a reaction product between dibutyltin oxide and a phthalate, and dibutyltin bis(acetylacetonate); organoaluminum compounds such as aluminum tris(acetylacetonate), aluminum tris(ethylacetoacetate), and diisopropoxyaluminum ethylacetoacetate; chelate compounds such as zirconium tetraacetylacetonate and titanium tetraacetylacetonate; lead octoate; amine compounds such as butylamine, octylamine, dibutylamine, laurylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo[5,4,0]undecene-7; salts of these amine compounds with carboxylic acids or the like; acidic phosphates; reaction products between acidic phosphates and amines; saturated or unsaturated polycarboxylic acids or acid anhydrides thereof; low molecular weight polyamide resins obtained from excessive polyamines and polybasic acids; reaction products between excessive polyamines and epoxy compounds; amino group-containing silane coupling agents such as γ-aminopropyltrimethoxysilane and N-(β-aminoethyl)-γ-aminopropylmethyldimethoxysilane. Specific examples of such a silanol condensation catalyalso include silanol condensation catalysts well known in the art, such as other acidic catalysts and basic catalysts. These catalysts may be used each alone or in combination of two or more thereof.

The silanol condensation catalyst is preferably used within a range from 0.01 to 15 parts by weight, and particularly preferably from 0.1 to 10 parts by weight in relation to 100 parts by weight of the (B) component (or when the (E) component is also added, in relation to 100 parts by weight of the sum amount of the (B) and the (E) components). If the amount of the silanol condensation catalyst is less than 0.01 parts by weight, curability of the composition is degraded, and thus such an amount is not preferable. On the contrary, the amount exceeds 15 parts by weight, storage stability and adhesiveness are degraded and thus such an amount is not preferable, either. From the viewpoints of curing rate and storage stability, tetravalent tin catalysts are preferable.

The filler is not particularly limited, and a filler well known in the art may be used. Specific examples of such a filler include inorganic fillers such as calcium carbonate, magnesium carbonate, titanium oxide, fly ash, silica sand, crushed stone, gravel, carbon black, fused silica, precipitated silica, diatom earth, white clay, kaolin, clay, talc, wood flour, walnut shell powder, chaff powder, silicic acid anhydride, quartz powder, aluminum powder, zinc powder, asbestos, glass fibers, carbon fibers, glass bead, alumina, glass balloon, fly ash balloon, Shirasu balloon, silica balloon, and silicon oxide; and organic fillers, for example, woody fillers such as pulp and cotton chip; fine powders of powdered rubber, regenerated rubber, and thermoplastic or thermosetting resins, and hollow bodies made of polystyrene, etc. These fillers may be used each alone or in combination of two or more thereof.

The filler is used preferably within a range from 50 to 1000 parts by weight, and particularly preferably in a range from 60 to 900 parts by weight, in relation to 100 parts by weight of the (B) component. When the amount of the filler is less than 50 parts by weight, the purpose to use the filler may not be achieved. On the other hand, if the amount of the filler exceeds 1000 parts by weight, viscosity may be increased and thereby workability may be degraded. As the filler, fly ash balloon and calcium carbonate are particularly preferable.

The thixotropic agent is not particularly limited, and a thixotropic agent well known in the art may be used. Specific examples of such a thixotropic agent include hydrogenated castor oil, organic amide wax, organic bentonite and calcium stearate. These thixotropic agents may be used each alone or in combination of two or more thereof.

The thixotropic agent is used preferably within a range from 0.1 to 50 parts by weight, and particularly preferably within a range from 1 to 30 parts by weight, in relation to 100 parts by weight of the (B) component. If the amount of the thixotropic agent is less than 0.1 parts by weight, thixotropy may be insufficient, and thus such an amount is not preferable. On the other hand, such an amount of the thixotropic agent as exceeding 50 parts by weight is not also preferable in view of cost.

The age resistor is not particularly limited, and an age resistor well known in the art may be used. Specific examples of such an age resistor include phenol antioxidants, aromatic amine antioxidants, sulfur-based antioxidants, phosphorus-based antioxidants, benzotriazole ultraviolet absorbers, salicylate ultraviolet absorbers, benzoate ultraviolet absorbers, a benzophenone ultraviolet absorbers, hindered amine light stabilizers and nickel-based light stabilizers.

The age resistor is used preferably in a range from 0.01 to 20 parts by weight, and particularly preferably 0.1 to 10 parts by weight, in relation to 100 parts by weight of the (B) component.

Examples of such phenol antioxidants include 2,6-di-tert-butylphenol, 2,4-di-tert-butylphenol, 2,6-di-tert-butyl-4-methylphenol, 2,5-di-tert-butylhydroquinone, n-octadecyl-3-(3,5-di-tert-butyl-4-hydroxyphenyl)-propionate, pentaerythrityl-tetrakis[3-(3,5-di-tert-butyl-4-hydroxyphenyl)propionate], 2,2'-methylenebis(4-methyl-6-tert-butylphenol), 4,4'-butylidenebis(3-methyl-6-tert-butylphenol), and 4,4'-thiobis(3-methyl-6-tert-butylphenol).

Examples of such aromatic amine antioxidants include N,N'-diphenyl-p-phenylenediamine and 6-ethoxy-2,2,4-trimethyl-1,2-dihydroquinoline.

Examples of such sulfur-based antioxidants include dilauryl-3,3'-thiodipropionate, ditridecyl-3,3'-thiodipropionate and distearyl-3,3'-thiodipropionate.

Examples of such phosphorus-based antioxidants include diphenylisooctylphosphite and triphenylphosphite.

Examples of such benzotriazole ultraviolet absorbers include
2-(3,5-di-tert-butyl-2-hydroxyphenyl)-5-chlorobenzotriazole,
2-(3-tert-butyl-5-methyl-2-hydroxyphenyl)-5-chlorobenzotriazole,
2-(3,5-di-tert-butyl-2-hydroxyphenyl)benzotriazole,
and 2-(5-methyl-2-hydroxyphenyl)benzotriazole.

Examples of such salycylate ultraviolet absorbers include 4-tert-butylphenyl salicylate.

Examples of such benzoate ultraviolet absorbers may include
2,4-di-tert-butylphenyl-3,5-di-tert-butyl-4-hydroxybenzoate.

Examples of such benzophenone ultraviolet absorbers include 2,4-dihydroxybenzophenone, 2-hydroxy-4-methoxybenzophenone, 2-hydroxy-4-n-octoxybenzophenone, 2-hydroxy-4-n-dodecyloxybenzophenone and 2-hydroxy-4-benzyloxybenzophenone.

Examples of such hindered amine light stabilizers include bis(2,2,6,6-tetramethyl-4-piperidyl)sebacate, bis(1,2,2,6,6-pentamethyl-4-piperidyl)sebacate, 1-{2-[3-(3,5-di-tert-butyl-4-hydroxyphenyl)-propionyloxy]ethyl}-4-[3-(3,5-di-tert-butyl-4-hydroxyphenyl)propionyloxy]-2,2,6,6-tetramethylpiperidine, and 4-benzoyloxy-2,2,6,6-tetramethylpiperidine.

Examples of such nickel-based light stabilizers may include nickel dibutyldithiocarbamate, [2,2'-thiobis(4-tert-octylphenolate)]-2-ethylhexylamine nickel (II) and [2,2'-thiobis(4-tert-octylphenolate)]-n-butylamine nickel (II).

The age resistors may be used each alone or in combination of two or more thereof. Some combinations of the age resistors may effectively function as compared with single use thereof.

The curable composition of the present invention may be used as a sealant, an adhesive, a tackifier, an injection material, a waterproof material, a damping material, a soundproof material and the like in wide fields including applications to civil engineering, construction and industry.

Specific examples of such applications include joint sealants for interior/exterior wall, floor, various concretes, and metals; sealants for ships; joint sealants for pools; sealants for repelling ants; adhesives for floor materials, wall materials, roof materials and sheet waterproof materials; adhesives for tiles, stone materials, ornamental panels and the like for interior/exterior wall; sealing adhesives for earthen pipes, manholes, cables and the like; potting materials; various pressure sensitive adhesives; pavement materials, for ordinary road, expressway, and airport runway; repairing materials; joint materials; waterproof materials for building basements and multilevel parking structure; waterproof material for roof; waterproof materials for floor; coating materials for roof; and damping materials, soundproof materials, mold form materials and antirust materials for vehicles, ships and home electric appliances. These materials may also be used as one-component curable compositions.

Among the above described applications, the curable composition of the present invention is particularly suitable for applications to adhesives for tiles, waterproof materials, road pavement materials, sealants and damping materials. Now, description will be made below on the applications to waterproof materials, adhesives for tiles, road pavement materials, sealants and damping materials.

### <Waterproof materials>

The mainstream of the way to perform waterproofing work is a so-called hot-applied asphalt waterproofing roofing method, comprising the step of melting blown asphalt at the construction site, thereby boding asphalt roofing. The step is repeated three to four times, to form a waterproofing layer. Other examples of such a way to perform waterproofing work include the torch roofing method comprising heating the rear side of an asphalt roofing sheet with a special torch burner so that the sheet can be fixed onto the base material while melting the asphalt applied on the rear side; the ambient-temperature (adhesion) roofing method, comprising fixing an asphalt roofing sheet on the base material with an adhesive applied to the rear side of the sheet and a bonding roofing method comprising fixing asphalt roofing sheet onto a base material with an asphalt-based adhesive. The hot-applied asphalt waterproofing roofing method has high waterproofing reliability (adhesive property to the base material) and thus has been the mainstream of the waterproofing work.

However, the hot-applied asphalt waterproofing roofing method has drawbacks in that, upon melting asphalt, significantly large amounts of fumes and odor generated from the molten asphalt seriously pollutes the surrounding environment. Thus, the method has been avoided to apply in residential areas and central urban areas. Thus, applicable area has been limited. Moreover, workers also hate to perform this method considering the risk of burn injury.

In order to overcome these problems, prior to the bonding of the asphalt roofing sheets, a cut-back asphalt prepared by diluting asphalt with a solvent is used as the primer to improve adhesiveness to a base material. However, volatilization of the solvent significantly causes serious pollution of surrounding environment.

In contrast, a waterproof material incorporating the curable composition of the present invention does not generate asphalt fumes or odor or solvent odor during working. Additionally, the waterproof material exhibits sufficient room temperature curability, and satisfactory waterproof adhesiveness to mortar. Thus, the waterproof material incorporating the curable composition of the present invention is effective as a waterproof material, an adhesive for asphalt roofing sheets, and a primer.

### <Adhesives for tiles>

Adhesives for tiles are used in tiling walls of buildings, bathrooms, toilets, kitchens, etc. Specific examples of adherends for the adhesives for bonding tiles such as earthenware tiles, ceramic tiles and stoneware tiles include inorganic base materials such as cement mortars, calcium silicate boards, cement boards, ALC boards, and ceramic siding boards; and wood base materials such as plywood laminates.

Conventionally, the major process for tiling was a boll tiling method using kneaded balls of cement mortar. In recent years, cases using organic adhesives have been increased. using. Urethane resin-based or epoxy resin-based adhesives have been known as typical reactive type adhesives for tiles. Urethane resin-based adhesives have problems of irritation caused by isocyanate therein, of harmfulness from organic solvents, and of adverse effects on human bodies. Epoxy resin-based adhesives also have problems of irritation caused by amine curing agents, harmfulness from organic solvent, and adverse effects on human bodies.

In addition, the epoxy resin-based adhesives cannot absorb distortion caused by external stress and may cause detachment of tiles by vibration due to earthquake, etc. One approach is disclosed in Japanese Unexamined Patent Application Publication No. 06-101319 to overcome these problems. The description reports that addition of a rubbery organic polymer or a modified silicone compound improved the brittleness of the cured products of epoxy resins, thereby producing flexible cured products. However, this approach does not provide satisfactory waterproof adhesiveness in a place where designed materials, such as tiles and stone materials, frequently come into contact with water. In such a place, the tiles and stone materials tend to detach from the base in such positions.

In contrast, an adhesive for tiles, comprising the curable composition of the present invention produces excellent waterproof adhesiveness, in particular alkaline waterproof adhesiveness, and is usable without any solvent. Thus, no problem such as odor, inflammability, or adverse effects on human bodies occurs.

### <Road pavement materials>

In using asphalt as the road paving material, hot-applied asphalt paving has been generally employed. The hot-applied asphalt paving has such problems as generation of large amounts of fumes and odor from hot asphalt, and generated fumes and odor seriously pollute surrounding environment. Moreover, asphalt paved through hot-applied asphalt paving has insufficient elasticity and adhesiveness, and surface of the road becomes fluidized as temperature increases in summer season, thereby causing cracks and sticky surfaces. In winter season, caking power of the aggregates in the asphalt paving material decreases, thereby causing deterioration in the surface layers of the paved asphalt and cracks and separation due to difference in temperature.

In contrast, the road paving material incorporating the curable composition of the present invention makes it possible to perform paving and maintenance without generating fume or odor.

Upon using the curable composition of the present invention as the road paving material, it is preferable to blend an aggregate to increase the reinforcing property.

The aggregate is preferably one of coarse aggregates, fine aggregates, and fillers used in asphalt paving. The coarse aggregate is generally crushed stone, but may be crushed cobble, gravel, or slag. The fine aggregate is generally sand such as river sand, sea sand, or mountain sand, but may be screenings from iron sand or crushed stone. Light-colored aggregates and hard aggregates are also usable. The filler is generally powdered stone prepared by crushing limestone or igneous rocks, but may be powder of other rocks, calcium carbonate powder, caustic lime, plaster, fly ash, fly ash balloon, cement, or incinerated ash. Carbon black and pigments are also usable. Moreover, the filler may partly contain short fibers such as asbestos, glass fibers, rock wool, synthetic fibers, or carbon fibers, or mica powder.

### <Sealants>

In the fields of civil engineering and construction, boats and ships, and automobiles, various sealing materials are used to fill or seal joints or cracked parts to provide watertight or airtight properties. Sealing materials containing reactive silicon group-containing organic polymers are widely used from the standpoint of weather resistance, curability, and workability (for example, refer to Japanese Unexamined Patent Application Publication No. 08-003537). However, organic polymers used as the sealing materials do not per se have sufficient waterproofing property. Thus, for example, when they are immersed in water for a long time, permeation of water and decrease in adhesion interfacial force are observed, and sufficient water stopping property and adhesiveness are not achieved. Also, these sealing materials do not have sufficient weather resistance and undergo cracking on the surface or inside of the material if once they are exposed to outdoor environment. As a result, the material cannot show sufficient water stopping property and adhesiveness.

In contrast, a sealant incorporating the curable composition of the present invention has excellent weather resistance, waterproofing property, and adhesiveness.

### <Damping materials>

Damping materials are used in vehicles, buildings, home electric appliances, and the like.

Damping materials has been a material directly or indirectly applied to a vibration generating source to control vibration, thereby achieving sound insulation. For example, damping materials are used in steel boards such as dash panels that separate the vehicle interior from the engine room, or floors, or trunk rooms; building structures such as floors of each house of a condominium building; and home electric appliances that generate noise, such as air conditioners, compressors, and vacuum cleaners.

In order to bond an asphalt sheet onto a floor line of an automobile so that the asphalt sheet can function as a damping sheet, it is necessary to melt the asphalt by heating. Thus, there has been a problem as to thermal fluidity, i.e., it has been difficult to maintain evenness of thickness in the sheet. This leads to technical problems of unevenness of damping effects, poor fitability to irregularities of the base material, and thus failure of achieving close and uniform thermal bonding to the base material. In order to overcome these problems, a technique of mixing a fibrous filler to a sheet base material has been disclosed (e.g., Japanese Unexamined Patent Application Publication No. 07-323791). However, this technique does not satisfy the requirements of properties since it requires thermal bonding of melted asphalt. Moreover, an ambient-temperature curing process is desired to increase efficiency of working and to improve the adhesion to the irregularities.

In contrast, a damping material incorporating the curable composition of the present invention has excellent workability, causes no dilation during working, and exhibits excellent adhesiveness to irregularities.

### EXAMPLES

The present invention is described below based on specific examples for the purpose of more clearly illustrating the content of the present invention, but it is not limited to these examples.

### (Synthesis Example 1)

Propylene oxide was polymerized using an initiator, a polyoxypropylene diol having a number average molecular weight of 2,000, and zinc hexacyanocobaltate-glyme complex catalyst, to yield a polyoxypropylene glycol having a number average molecular weight of 30, 000 (a molecular weight relative to polystyrene standard measured by GPC). The yielded polyoxypropylene glycol was reacted with sodium methoxide, and then with allyl chloride to convert the terminal hydroxy groups into unsaturated groups. Then, dimethoxymethylsilane was reacted with the resultant unsaturated group-terminated polyoxyalkylene (at the amount of dimethoxymethylsilane: 0.82 moles per mole of unsaturated groups in the polyoxyalkylene) in the presence of chloroplatinic acid, to yield a polyoxypropylene polymer (polymer A), 80% (based on ¹H-NMR analysis) of whose molecular terminals were occupied by dimethoxymethylsilyl groups and whose number average molecular weight was 30,200.

### (Synthesis Example 2)

Propylene oxide was polymerized using an initiator, a polyoxypropylene diol having a number average molecular weight of 2,000, and zinc hexacyanocobaltate-glyme complex catalyst, to produce a polyoxypropylene glycol having a number average molecular weight of 26, 000 (a molecular weight relative to polystyrene standard measured by GPC). The yielded polyoxypropylene glycol was reacted with sodium methoxide, and then with allyl chloride to convert the terminal hydroxy groups into unsaturated groups. Then, a hydrosilane compound represented by HSi (CH₃) (CH₃)OSi(CH₃) (CH₃)CH₂CH₂Si (OCH₃)₃, was reacted with the resultant unsaturated group-terminated polyoxyalkylene (at the amount of the hydrosilane compound: 0.77 moles per mole of unsaturated groups in the polyoxyalkylene) in the presence of chloroplatinic acid, to yield a polyoxypropylene polymer (polymer B), 75% (based on ¹H-NMR analysis) of whose molecular terminals were occupied by trimethoxysilyl groups and whose number average molecular weight was 26,300.

### (Synthesis Example 3)

Propylene oxide was polymerized using an initiator, a polypropylene glycol having a number average molecular weight of 2,000, and zinc hexacyanocobaltate-glyme complex catalyst, to yield a polyoxypropylene glycol having a number average molecular weight of 15, 000 (a molecular weight relative to polystyrene standard measured by GPC). The yielded polyoxypropylene glycol was reacted with sodium methoxide, and then the terminal hydroxy groups were converted into methallyl groups by adding 3-chloro-2-methyl-1-propene. Then, dimethoxymethylsilane was reacted with the resultant methallyl group-terminated polyoxyalkylene (at the amount of the dimethoxymethylsilane: 1.2 moles per mole of methallyl groups in the polyoxyalkylene) in the presence of an antioxidant 2, 6-di-tert-butyl-p-cresol, chloroplatinic acid and sulfur (1 eq/Pt), to yield a polyoxypropylene polymer (polymer C), 97% (based on ¹H-NMR analysis) of whose molecular terminals were occupied by dimethoxymethylsilyl groups and whose number average molecular weight was 15,300.

### (Synthesis Example 4)

Propylene oxide was polymerized using an initiator, a polyoxypropylene diol having a number average molecular weight of 2,000 and zinc hexacyanocobaltate-glyme complex catalyst, to yield a polyoxypropylene glycol having a number average molecular weight of 16,000 (a molecular weight relative to polystyrene standard measured by GPC). The yielded polyoxypropylene glycol was reacted with sodium methoxide, and then with allyl chloride to convert the terminal hydroxy groups into unsaturated groups. Then, dimethoxymethylsilane was reacted with the resultant unsaturated group-terminated polyoxyalkylene (at the amount of the dimethoxymethylsilane: 0.65 moles per mole of unsaturated groups in the polyoxyalkylene in the presence of chloroplatinic acid, to yield a polyoxypropylene polymer (polymer D), 65% (based on ¹H-NMR analysis) of whose molecular terminals were occupied by dimethoxymethylsilyl groups and whose number average molecular weight of 16,200.

### (Synthesis Example 5)

A polyoxypropylene diol having a number average molecular weight of 3,000 was reacted with sodium methoxide, and then with allyl chloride to convert the terminal hydroxy groups into unsaturated groups. Then, dimethoxymethylsilane was reacted with the resultant unsaturated group-terminated polyoxyalkylene (at the amount of the dimethoxymethylsilane: 0.77 moles per mole of the unsaturated group in the polyoxyalkylene) in the presence of chloroplatinic acid, to produce a polyoxypropylene polymer (polymer E), 75% (based on ¹H-NMR analysis) of whose molecular terminals were occupied by dimethoxymethylsilyl groups and whose number average molecular weight was 5,200 (a molecular weight relative to polystyrene standard measured by GPC).

### (Synthesis Example 6)

A pressure-resistant reaction vessel equipped with a stirrer was charged with 800 g of a polyoxypropylene glycol having a number average molecular weight of 5,200 and 50.2 g of isophorone diisocyanate. After mixing together, 0.8 g of a tin catalyst (a 10% DOP solution of dibutyltin dilaurate) was added to the mixture thus obtained. Stirring of the mixture at 80°C for 4 hours yielded an isocyanato group-terminated polymer having a molecular weight of about 15, 000 (the molecular weight was determined based on the titer (0.579%) for the isocyanato group). The reaction mixture was cooled down to 60°C, then added with 1.0 [eq/NCO group] of γ-aminopropyltrimethoxysilane, and the mixture was stirred for about 30 minutes to yield a polyoxypropylene polymer (polymer F) having trimethoxysilyl groups at the molecular terminals thereof and having a number average molecular weight of 17,000 (a molecular weight relative to polystyrene standard measured by GPC).

### (Synthesis Example 7)

Propylene oxide was polymerized using an initiator, a polyoxypropylene diol having a number average molecular weight of 2,000, and zinc hexacyanocobaltate-glyme complex catalyst, to yield a polyoxypropylene glycol having a number average molecular weight of 25, 500 (a molecular weight relative to polystyrene standard measured by GPC). Then, 1.8 parts by weight of γ-isocyanatopropyltrimethoxysilane was added to 100 parts by weight of the yielded polyoxypropylene glycol, and the mixture thus obtained was allowed to react at 90°C for 5 hours to yield a trimethoxysilyl-terminated polyoxypropylene polymer (polymer G).

### (Synthesis Example 8)

Propylene oxide was polymerized using a 1/1 (weight ratio) mixture composed of a polyoxypropylene diol having a number average molecular weight of 2,000 and a polyoxypropylene triol having a number average molecular weight of 3,000 as an initiator and zinc hexacyanocobaltate-glyme complex catalyst, to yield a polypropylene oxide having a number average molecular weight of 19,800 (a molecular weight relative to polystyrene standard measured by GPC). The yielded polypropylene oxide was reacted with sodium methoxide, and then with allyl chloride to convert terminal hydroxy groups into unsaturated groups. Then, dimethoxymethylsilane was reacted with the resultant unsaturated group-terminated polyoxyalkylene (at the amount of the dimethoxymethylsilane: 0.72 moles per mole of the unsaturated group of the unsaturated group-terminated polyoxyalkylene) in the presence of chloroplatinic acid, to yield a polyoxypropylene polymer (polymer I), 70% (based on ¹H-NMR analysis) of whose molecular terminals were occupied by dimethoxymethylsilyl groups and whose number average molecular weight was 20,000.

### (Synthesis Example 9)

A solution, prepared by dissolving 2.6 g of azobisisobutyronitrile as a polymerization initiator in a mixture composed of 6.0 g of butyl acrylate, 66 g of methyl methacrylate, 13 g of stearyl methacrylate, 5.4 g of γ-methacryloxypropylmethyldimethoxysilane, 7.0 g of γ-mercaptopropylmethyldimethoxysilane and 23 g of toluene, was added dropwise into 43 g of toluene heated to 110°C over 4 hours. Then, the reaction mixture thus obtained was allowed to polymerize for 2 hours, to yield a copolymer (polymer H) having a solid content of 60% and a number average molecular weight of 2,200 based on GPC (relative to polystyrene standard).

Each of polymers A to E and I obtained in Synthesis Examples 1 to 5 and 8, respectively, was blended with polymer H obtained in Synthesis Example 9 in the solid content ratio (weight ratio) of 70/30. The blended mixture thus obtained was devolatilized by heating it in an evaporator at 110°C and under a reduced pressure to yield a transparent and viscous liquid having a solid content of 99% or more.

The various materials used in Examples are listed below.
(A) Components
   - Straight asphalt 1: Straight Asphalt 150-200 (manufactured by Cosmo Oil Co., Ltd.), asphaltene concentration: 9.1 parts by weight (measured according to JPI-5S-22-83 method)
   - Straight asphalt 2: PLANTA-2 (180-200) (manufactured by PDVSA Ltd.), asphaltene concentration: 13.9 parts by weight (measured according to JPI-5S-22-83 method)
   - Blown asphalt: Blown Asphalt 20-30 (manufactured by Cosmo Oil Co., Ltd.)
   - Cut-back asphalt: Toluene dilution of blown asphalt 20-30 (solid content: 60%)
   - Coal tar; Manufactured by Cosmo Oil Co., Ltd.
(B) Components
   - Polymer A, Polymer B, Polymer C, Polymer D and Polymer E obtained in above Synthesis Examples
(C) Components
   - DIDP: Diisodecylphthalate (manufactured by New Japan Chemical Co., Ltd.)
   - Mesamol II: Phenyl alkylsulfonate (manufactured by Bayer Ltd.)
   - HB-40: partially hydrogenated terphenyl (manufactured by Solutia Inc.)
   - Topcizer No. 3: N-ethyl-o/p-toluenesulfonamide (manufactured by Fuji Amide Chemical Co., Ltd.)
(D) Component
   - Epicoat 828: Epoxy resin (manufactured by Japan Epoxy Resin Co., Ltd.)
(E) Component
   Polymer (F) obtained in one of above Synthesis Examples
(F) Components
   - PM-100: Phenol-modified C-5/C-9 petroleum resin (manufactured by Toho Chemical Industry Co., Ltd.)
   - FTR-8100: C-9 petroleum resin (manufactured by Mitsui Petroleum Chemical, Co., Ltd.)
   - HP-70: Alkylphenol-modified xylene resin (manufactured by Fudow Co., Ltd.)
   - YS Polyster T-30: Phenol-modified terpene resin (manufactured by Yasuhara Chemical Co., Ltd.)
   - Mightyace G-125: Phenol-modified terpene resin (manufactured by Yasuhara Chemical Co., Ltd.)

### (Block copolymer)

- SBS: Styrene/butadiene/styrene block copolymer

### (Rubber component)

- SBR: Styrene/butadiene rubber

### (Silane coupling agents)

- A-1310: γ-Isocyanatepropyltriethoxysilane (manufactured by Dow Corning Toray Silicone Co., Ltd.)
- A-171: Vinyltrimethoxysilane (manufactured by Dow Corning Toray Silicone Co., Ltd.)
- A-187: γ-Glycidoxypropyltrimethoxysilane (manufactured by Dow Corning Toray Silicone Co., Ltd.)
- A-1120: N-(β-Aminoethyl)-γ-aminopropyltrimethoxysilane (manufactured by Dow Corning Toray Silicone Co., Ltd.)

### (Fillers)

- Calcium carbonate: Manufactured by Shiraishi Calcium Kaisha, Ltd.
- Fly ash balloon: Microballoon (alumina silicate manufactured by Tokai Kogyo Co., Ltd.)
- Sepiolite S: Magnesium silicate (manufactured by Nippon Talc Co., Ltd.)
- Silica sand: Manufactured by Maruo Calcium Co., Ltd.
- Talc: Microace P4 (Average particle size: 4.5 µm, manufactured by Nippon Talc Co., Ltd.)
- Aggregates

### (Curing catalysts)

- U-220: Organotin compound (manufactured by Nitto Kasei Co., Ltd.)
- SCAT-1: Organotin compound (manufactured by Sankyo Organic Chemicals Co., Ltd.)
- SCAT-27: Organotin compound (manufactured by Sankyo Organic Chemicals Co., Ltd.)

### (Epoxy resin curing agents)

- H-30: Ketimine curing agent (manufactured by Japan Epoxy Resin Co., Ltd.)
- TAP: 2,4,6-Tris(dimethylaminomethyl)phenol (manufactured by Kayakuakuzo Co., Ltd.)

### (Antioxidant)

- IRGANOX 245: Hindered phenol antioxidant (manufactured by Ciba Specialty Chemicals Ltd.)

### (Ultraviolet absorber)

- TINUVIN 213: Benzotriazole ultraviolet absorber (manufactured by Ciba Specialty Chemicals Ltd.)

### (Light stabilizer)

- SANOL LS765: Hindered amine light stabilizer (manufactured by Sankyo Co., Ltd.)

### (Evaluation of Physical Properties)

Evaluation was carried out on the following items.

### <Odor>

Whether solvent odor, and fume and odor of asphalt were generated or not was judged upon applying a composition. A case where neither odor nor fume was generated was evaluated as good, while a case where either fume or odor was generated was evaluated as poor.

### <Curability>

A composition was applied and then the surface of the composition was touched with a spatula. The time elapsed until the composition no longer stuck to the spatula was measured, under the conditions of 23°C and 50% R.H. A case where the surface of the composition was cured within 30 minutes was judged as good, while a case where the composition was not cured was judged as poor.

### <Storage stability>

Curable compositions were each hermetically stored at 5°C, 23°C or 50°C for 30 days, and was evaluated visually whether solid-liquid separation was observed or not. A case where no separation was observed in 30 days was graded as "A". A case where no separation was observed in 20 days was graded as "B". A case where segregation was observed within 10 days was graded as "C".

### <Tensile properties of a cured product>

A composition was formed to a sheet having thickness of about 3 mm. The sheet was cured at 23°C for 3 days and subsequently at 50°C for 4 days. Then a dumbbell-shaped specimen of the type No. 3 in accordance with JIS K 6251 was punched out from the sheet. Tensile strength at break (Tb) and the elongation at break (Eb) of the specimen were measured by an autograph (manufactured by Shimadzu Corp.) at a tensile speed of 200 mm/min (23°C, 50% R.H.). The specimen having Tb values of 1.0 MPa or more was graded as "A", that having Tb values from 0.4 to 1.0 MPa was graded as "B", and that having Tb values of 0.4 MPa or less was graded as "C". As for the Eb values, the specimen having Eb values of 100% or more was graded as "A", that having Eb values from 50 to 100% was graded as "B", and that having Eb values of 50% or less was graded as "C".

### <Adhesiveness>

A composition was applied in beads on a mortar base material, and cured at 23°C and 50% R.H. for 7 days. Then, the boundary between the cured product and the mortar was cut with a knife, and the cured product was peeled off to observe the adhesion state. A case where an adhesive was completely was left on the mortar base material was graded as "A". A case where nearly half of an adhesive was left on the mortar base material was graded as "B". And a case where absolutely no adhesive was left on the mortar base material was graded as "C".

Mortar: 50 × 50 × 15 mm, manufactured by Engineering Test Service.

### <Water resistant adhesiveness>

A specimen formed and cured according to the above described procedures was immersed in water at 23°C for 7 days. Immediately after taking out the specimen from the water, the boundary between the cured product and the mortar was cut with a knife, and the cured product was peeled off to observe adhesion state. A case where the adhesive stayed on the mortar base material was graded as "A". A case where part of the adhesive was left on the mortar base material was graded as "B". And a case where no adhesive was left on the mortar base material was graded as "C".

Mortar: 50 × 50 × 15 mm, manufactured by Engineering Test Service.

### <Weather resistance test>

A curable composition was filled in to form a 3 mm-thick sheet. The sheet was allowed to stand at 23°C for 3 days, and then heated at 50°C for 4 days to yield a rubbery sheet. This rubbery sheet was placed on a 1 mm-thick aluminum plate and placed in a sunshine weatherometer (manufactured by Suga Test Instruments Co., Ltd.) to evaluate weather resistance of the sheet. A case where no degradation was observed in 1500-hour irradiation of sunshine was graded as "A". A case where no degradation was observed in 1000-hour irradiation of sunshine was graded as "B". And a case where degradation was observed during 1000-hour irradiation of sunshine was graded as "C".

### <Workability>

The viscosity of a composition was measured with a BH type viscometer (rotor: No. 7, speed of rotation: 10 rpm, temperature: 23°C). A case where the viscosity was 500 Pa·s or less was graded as good, and a case where the viscosity was 500 Pa·s or above was graded as poor.

### <Test for measuring adhesiveness to tiles>

An adhesive was applied onto a 70 × 70 × 20 mm mortar plate, and the adhesive was made uniform with a comb trowel. Then a 45 × 45 × 7 mm porcelain tile was adhered onto the mortar plate, and cured for 7 days (23°C, 50% R.H.). A tensile jig was fixed on the surface of tile side of the specimen with an epoxy adhesive. The specimen was subjected to a tensile test with an autograph (tensile speed: 5 mm/min). Another specimen prepared as described above was immersed in warm water at 60°C or a saturated aqueous solution of calcium hydroxide at 60°C for 7 days. Then, the specimen was taken out from the water or the solution, and immediately subjected to a tensile test to evaluate the water-resistant adhesive strength. The ratios of the adhesive strength after immersing in warm water at 60°C and the adhesive strength after immersing in the saturated aqueous solution of calcium hydroxide at 60°C to the adhesive strength under normal conditions were defined as water-resistant retention ratio and alkali-resistant retention ratio, respectively.

### (Examples 1 to 13, Comparative Examples 1 to 3)

According to the compositions illustrated in Table 1, various blending materials were kneaded with a 5 L mixer to prepare the curable compositions of Examples 1 to 13 and Comparative Examples 1 to 3.
The evaluation results obtained are illustrated in Table 1.

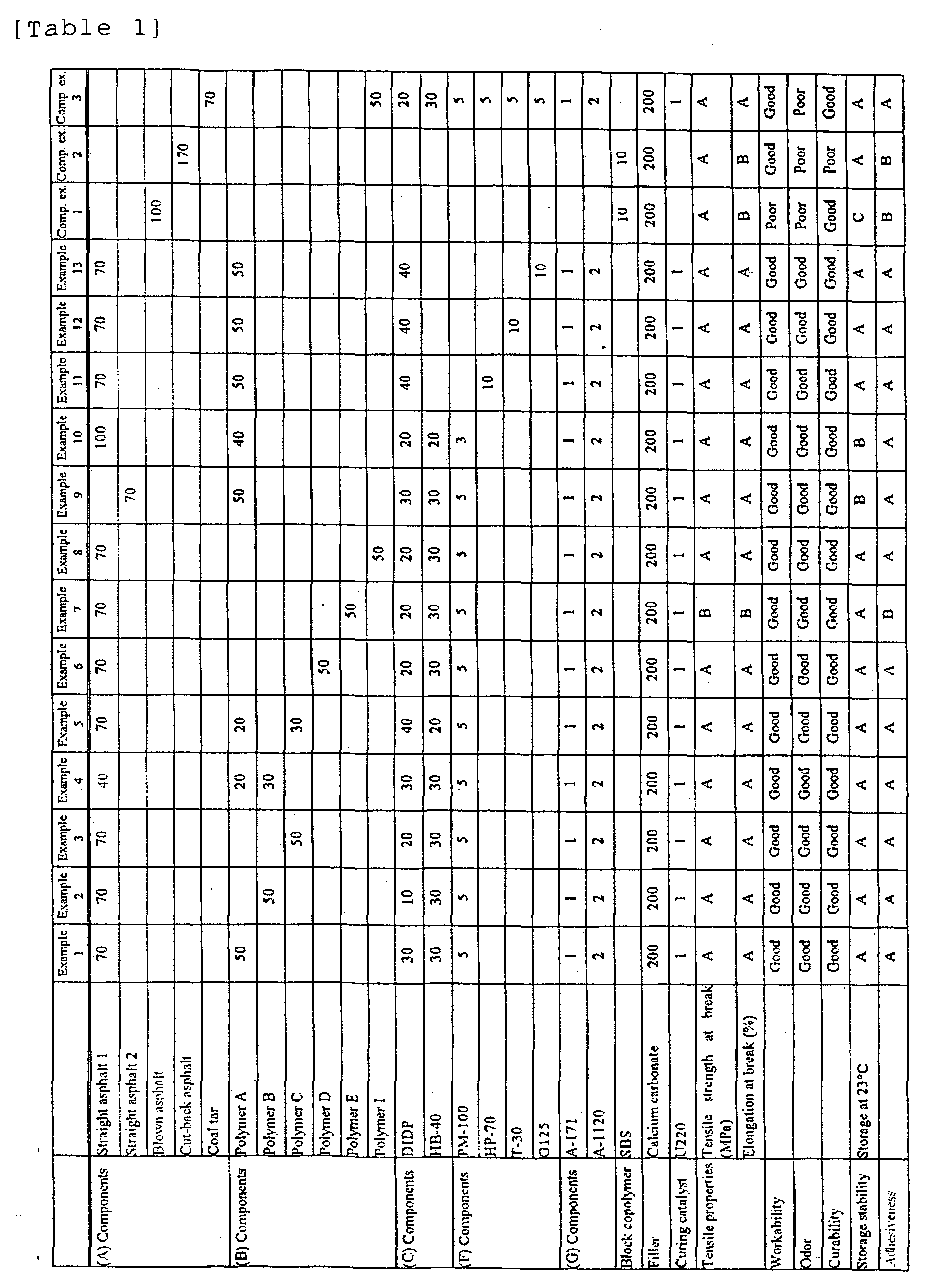

The curable compositions of Examples generated neither fume and odor of asphalt nor solvent odor in the handling process. And they exhibited sufficient room-temperature curability, satisfactory adhesiveness to mortar, and satisfactory dispersion stability. On the other hand, no compositions having a satisfactory balance between these properties were found in Comparative Examples.

### (Examples 14 to 26 and Comparative Examples 4 to 6)

Evaluations as to plasticizers (C) were carried out in Comparative experiments. The results obtained are illustrated in Table 2.

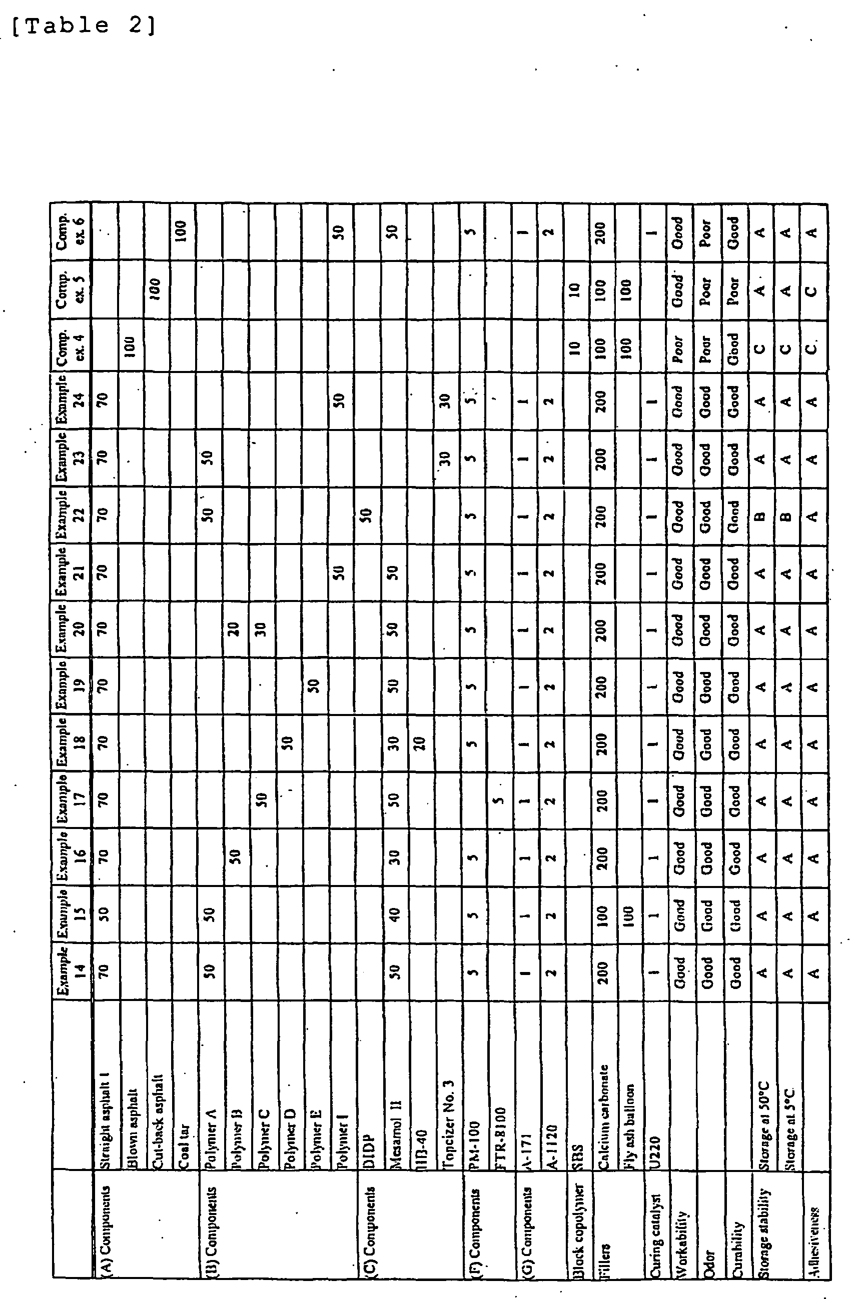

### (Examples 27 to 45 and Comparative Examples 7 to 10)

Effects due to addition of the epoxy resin (D) were evaluated. The results obtained are illustrated in Tables 3 and 4.

**[Table 3]**

| | | Example 27 | Example 28 | Example 29 | Example 30 | Example 31 | Example 32 | Example 33 | Example 34 | Example 36 | Example 37 | Comp. ex. 7 | Comp. ex. 8 |
|---|---|---|---|---|---|---|---|---|---|---|---|---|---|
| (A) Components | Straight asphalt 1 | 70 | 70 | 50 | 70 | 50 | 70 | 70 | 70 | 70 | 70 | | 70 |
| | Blown asphalt | | | | | | | | | | | 100 | |
| (B) Components | Polymer A | 50 | | | | | | | 50 | | | | |
| | Polymer B | | 50 | 50 | | | | 20 | | | 50 | | |
| | Polymer C | | | | 50 | | | 30 | | | | | |
| | Polymer D | | | | | 50 | | | | | | | |
| | Polymer E | | | | | | 50 | | | | | | |
| | Polymer I | | | | | | | | | 50 | | | |
| (C) Components | Mesamol 11 | 50 | 50 | | 50 | | 50 | 50 | 50 | 50 | 50 | | 60 |
| | HB-40 | | | 60 | | 50 | | | | | | | |
| (D) Component | Epicoal 828 | 20 | 20 | 20 | 20 | 20 | 20 | 20 | 20 | 20 | | | 150 |
| (F) Component | PM-100 | 5 | 5 | 5 | 5 | 5 | 5 | 5 | 5 | 5 | 5 | | |
| (G) Components | A-171 | 1 | 1 | 1 | 1 | 1 | 1 | 1 | | 1 | 1 | | 1 |
| | A-1120 | | | | | | | | 2 | | 2 | | |
| | A-187 | 2.5 | 2.5 | 2.5 | 2.5 | 2.5 | 2.5 | 2.5 | | 2.5 | | | 2.5 |
| Block copolymer | SBS | | | | | | | | | | | 10 | |
| Epoxy curing agents | H-30 | 10 | 10 | 10 | 10 | 10 | 10 | 10 | | 10 | | | 75 |
| | TAP | | | | | | | | 3 | | | | |
| Water | | | | | | | | | 0.2 | | | | |
| Fillers | Calcium carbonate | 200 | 200 | 200 | 100 | 200 | 100 | 200 | 200 | 200 | 200 | 100 | 200 |
| | Fly ash balloon | | | | 100 | | 100 | | | | | 100 | |
| Curing catalyst | U220 | 1 | 1 | 1 | 1 | 1 | 1 | 1 | 1 | 1 | 1 | | 1 |
| Workability | | Good | Good | Good | Good | Good | Good | Good | Good | Good | Good | Poor | Good |
| Odor | | Good | Good | Good | Good | Good | Good | Good | Good | Good | Good | Poor | Good |
| Curability | | Good | Good | Good | Good | Good | Good | Good | Good | Good | Good | Good | Good |
| Tensile properties | Tensile strength at break (Mpa) | A | A | A | A | A | A | A | A | A | A | C | A |
| | Elongation at break (%) | A | A | A | A | A | A | A | A | A | A | B | C |
| Storage Stabilily | Storage at 50°C | A | A | A | A | A | A | A | A | A | A | C | C |
| Water-resistant adhesiveness | | A | A | A | A | A | A | A | A | A | B | C | C |

**[Table 4]**

| | | | Example 38 | Example 39 | Example 40 | Example 41 | Example 42 | Example 43 | Example 44 | Example 45 | Comp. ex. 9 | Comp. ex. 10 |
|---|---|---|---|---|---|---|---|---|---|---|---|---|
| A agents | (A) Component | Straight asphalt 1 | 40 | 40 | 25 | 40 | 25 | 40 | 40 | 40 | | |
| | (B) Components | Polymer A | 50 | | | | | | | | 50 | |
| | | Polymer B | | 50 | 50 | | | | 20 | | | |
| | | Polymer C | | | | 50 | | | 30 | | | |
| | | Polymer D | | | | | 50 | | | | | |
| | | Polymer E | | | | | | 50 | | | | |
| | | Polymer I | | | | | | | | 50 | | 50 |
| | (C) Component | Mesamol II | 25 | 25 | 25 | 25 | 25 | 25 | 25 | 25 | 25 | 25 |
| | (F) Component | PM-100 | 5 | 5 | 5 | 5 | 5 | 5 | 5 | 5 | | |
| | (G) Components | A-171 | 1 | 1 | 1 | 1 | 1 | 1 | 1 | 1 | 1 | 1 |
| | | A-1120 | 2 | 2 | 2 | 2 | 2 | 2 | 2 | 2 | 2 | 2 |
| | Epoxy curing agent | TAP | 2 | 2 | 2 | 2 | 2 | 2 | 2 | 2 | 2 | 2 |
| | Filler | Calcium carbonate | 100 | 100 | 100 | 100 | 100 | 100 | 100 | 100 | 100 | 100 |
| B agents | (A) Component | Straight asphalt 1 | 30 | 30 | 25 | 30 | 25 | 30 | 30 | 30 | | |
| | (C) Component | Mesamoll II | 25 | 25 | 25 | 25 | 25 | 25 | 25 | 25 | 25 | 25 |
| | (D) Component | Epicoat 828 | 20 | 20 | 20 | 20 | 20 | 20 | 20 | 20 | 20 | 20 |
| | Filler | Calcium carbonate | 50 | 50 | 50 | 50 | 50 | 50 | 50 | 50 | 50 | 50 |
| | Curing catalyst | U220 | 1 | 1 | 1 | 1 | 1 | 1 | 1 | 1 | 1 | 1 |
| | Water-resistant adhesiveness | | A | A | A | A | A | A | A | A | C | C |

### (Examples 46 to 54 and Comparative Example 11)

Evaluation were made on the (E) component. The results obtained are illustrated in Table 5.

**[Table 5]**

| | | Example 46 | Example 47 | Example 48 | Example 49 | Example 50 | Example 51 | Example 52 | Example 53 | Example 54 | Comp. ex. 11 |
|---|---|---|---|---|---|---|---|---|---|---|---|
| (A) Components | Straight asphalt 1 | 70 | 70 | 50 | 70 | 50 | 70 | 70 | 70 | 70 | |
| | Blown asphalt | | | | | | | | | | 100 |
| (B) Components | Polymer A | 56 | | | | | | | | | |
| | Polymer B | | 56 | 56 | | | | 28 | | 80 | |
| | Polymer C | | | | 56 | | | 28 | | | |
| | Polymer D | | | | | 56 | | | | | |
| | Polymer E | | | | | | 56 | | | | |
| | Polymer I | | | | | | | | 56 | | |
| (C) Components | Mesamol II | 50 | 50 | | 50 | | 50 | 50 | 50 | 50 | |
| | HB-40 | | | 50 | | 40 | | | | | |
| E) Component | Polymer H | 24 | 24 | 24 | 24 | 24 | 24 | 24 | 24 | | |
| (F) Component | PM-100 | 8 | 8 | 8 | 8 | 8 | 8 | 8 | 8 | 8 | |
| (G) Components | A-171 | 1 | 1 | 1 | 1 | 1 | 1 | 1 | 1 | 1 | |
| | A-1120 | 2 | 2 | 2 | 2 | 2 | 2 | 2 | 2 | 2 | |
| Block copolymer | SBS | | | | | | | | | | 10 |
| Ultraviolet absorber | TINUVIN 213 | 1 | 1 | 1 | 1 | 1 | 1 | 1 | 1 | 1 | 1 |
| Light stabilizer | SANOL LS765 | 1 | 1 | 1 | 1 | 1 | 1 | 1 | 1 | 1 | 1 |
| Filters | Calcuim carbonate | 130 | 130 | 130 | 100 | 130 | 100 | 130 | 130 | 130 | 100 |
| | Fly ash balloon | | | | 30 | | 30 | | | | 30 |
| Curing catalyst | U220 | 1 | 1 | 1 | 1 | 1 | 1 | 1 | 1 | 1 | 1 |
| Workability | | Good | Good | Good | Good | Good | Good | Good | Good | Good | Poor |
| Odor | | Good | Good | Good | Good | Good | Good | Good | Good | Good | Poor |
| Curability | | Good | Good | Good | Good | Good | Good | Good | Good | Good | Good |
| Tensile properties | Tensile strength at break (MPa) | A | A | A | A | A | A | A | A | A | C |
| | Elongation at break (%) | A | A | A | A | A | A | A | A | A | C |
| Storage stability | Storage at 50°C | A | A | A | A | A | A | A | A | A | C |
| Weather resistance | | A | A | A | A | A | A | A | A | B | B |

### (Examples 55 to 57 and Comparative Examples 12 and 13)

Experiments were carried out on polymers having the group, -NR²-C(=O)-. The results obtained are illustrated in Table 6.

**[Table 6]**

| | | Example55 | Example56 | Example57 | Comp. ex. 12 | Comp. ex. 13 |
|---|---|---|---|---|---|---|
| (A) Components | Straight asphalt 1 | 70 | 50 | 70 | | |
| | Blown asphalt | | | | 100 | |
| | Cut-back asphalt | | | | | 100 |
| (B) Components | Polymer F | 50 | 50 | | | |
| | Polymer G | | | 50 | | |
| (C) Components | Mesamol II | 50 | 30 | 50 | | |
| | HB-40 | | 20 | | | |
| (F) Component | PM-100 | 5 | 5 | 5 | | |
| (G) Components | A-171 | 1 | 1 | 1 | | |
| | A-1120 | 2 | 2 | 2 | | |
| Block copolymer | SBS | | | | 10 | 10 |
| Fillers | Calcium carbonate | 200 | 100 | 200 | 100 | 100 |
| | Fly ash balloon | | 100 | | 100 | 100 |
| Curing catalyst | SCAT-1 | 2 | 2 | 2 | | |
| Workability | | Good | Good | Good | Poor | Good |
| Odor | | Good | Good | Good | Poor | Poor |
| Durability | | Good | Good | Good | Good | Poor |
| Storage stability | Storage at 50°C | A | A | A | C | A |
| Adhesion | | A | A | A | C | C |

### (Examples 58 to 62 and Comparative Examples 14 to 16): Comparison of performances as adhesives for tiles.

According to the compositions as illustrated in Table 7, various blending materials were kneaded with a 5 L mixer to prepare the adhesive of Examples 58 to 62 and Comparative Examples 14 to 16.

The evaluation results obtained are illustrated in Table 7.

**[Table 7]**

| | | Example 58 | Example 59 | Example 60 | Example 61 | Example 62 | Comp. ex. 14 | Comp. ex. 15 | Comp. ex. 16 |
|---|---|---|---|---|---|---|---|---|---|
| (A) Component | Straight asphalt I | 80 | 80 | 80 | 80 | 80 | | | |
| (B) Components | Polymer I | 100 | | | | 70 | 100 | | |
| | Polymer B | | 100 | | | | | 100 | |
| | Polymer F | | | 100 | | | | | 100 |
| | Polymer G | | | | 100 | | | | |
| (C) Components | Mesamol II | 50 | 25 | 25 | 50 | 50 | 50 | 25 | 25 |
| | HB-40 | | 25 | 25 | | | | 25 | 25 |
| (D) Component | Epicoat 828 | 10 | 10 | 10 | 10 | 10 | 10 | 10 | 10 |
| (E) Component | Polymer H | | | | | 30 | | | |
| (F) Component | PM-100 | 10 | 10 | 10 | 10 | 10 | | | |
| (G) Components | A-171 | 1 | 1 | 1 | 1 | 1 | 1 | 1 | 1 |
| | A-187 | 3 | 3 | 3 | 3 | 3 | 3 | 3 | 3 |
| Fillers | Calcium carbonate | 100 | 100 | 100 | 100 | 100 | 100 | 100 | 100 |
| | Sepiolite S | 5 | 5 | 5 | 5 | 5 | 5 | 5 | 5 |
| | Silica sand | 100 | 100 | 100 | 100 | 100 | 100 | 100 | 100 |
| Curing catalyst | SCAT-1 | 1 | 1 | 1 | 1 | 1 | 1 | 1 | 1 |
| Epoxy resin curing agent | Epikure H-30 | 5 | 5 | 5 | 5 | 5 | 5 | 5 | 5 |
| Adhesive strength for tiles | Normal condition (MPa) | 1.4 | 1.5 | 1.5 | 1.4 | 1.3 | 1.4 | 1.5 | 1.3 |
| | After immersing in water (MPa) | 1.3 | 1.4 | 1.4 | 1.3 | 1.1 | 0.9 | 1.0 | 0.8 |
| | After immersing in water (MPa) | 1.1 | 1.1 | 1.2 | 1.1 | 1.0 | 0.6 | 0.7 | 0.6 |
| | Water-resistant retention ratio (%) | 93 | 93 | 93 | 93 | 85 | 64 | 67 | 62 |
| | Alkali-resistant retention ratio (%) | 78 | 73 | 80 | 78 | 77 | 43 | 47 | 46 |

The adhesives of Examples exhibited a satisfactory adhesive strength under a normal condition, after immersing in water and after immersing in an aqueous solution of calcium hydroxide. These results revealed that these adhesives have sufficient adhesion and durability. On the other hand, adhesive strength after immersing in water was significantly degraded in the case of the adhesives of Comparative Examples, although adhesive strength under a normal condition was sufficient.

### (Examples 63 to 68 and Comparative Examples 17, 1 and 18): Comparison of performances as waterproof agents.

According to the compositions as illustrated in Table 8, various blending materials were kneaded with a 5 L mixer to prepare the waterproof agents of Examples 63 to 68 and Comparative Examples 17, 1 and 18.

The evaluation results obtained are illustrated in Table 8.

**[Table 8]**

| | | Example 63 | Example 64 | Example 65 | Example 66 | Example 67 | Example 68 | Comp. ex. 17 | Comp. ex. 1 | Comp. ex. 18 |
|---|---|---|---|---|---|---|---|---|---|---|
| (A) Components | Straight asphalt 1 | 140 | 140 | 140 | 140 | 140 | 140 | 20 | | |
| | Blown asphalt | | | | | | | 80 | 100 | |
| | Cut-back asphalt | | | | | | | | | 100 |
| (B) Components | Polymer I | 100 | | | | 70 | 100 | | | |
| | Polymer B | | 100 | | | | | | | |
| | Polymer F | | | 100 | | | | | | |
| | Polymer G | | | | 100 | | | | | |
| (C) Components | Mesamol II | 100 | 50 | 50 | 100 | 100 | 100 | | | |
| | HB-40 | | 50 | 50 | | | | | | |
| (D) Component | Epicoat 828 | | | | | | 10 | | | |
| (E) Component | Polymer H | | | | | 30 | | | | |
| (F) Component | PM-100 | 10 | 10 | 10 | 10 | 10 | 10 | | | |
| (G) Components | A-171 | 1 | 1 | 1 | 1 | 1 | 1 | | | |
| | A-1120 | 2 | 2 | 2 | 2 | 2 | | | | |
| | A-187 | | | | | | 3 | | | |
| Block copolymer | SBS | | | | | | | 10 | 10 | 10 |
| Filler | Calcium carbonate | 200 | 200 | 200 | 200 | 200 | 200 | 200 | 200 | 200 |
| Curing catalyst | SCAT-I | 1 | 1 | 1 | 1 | 1 | 1 | | | |
| Epoxy resin curing agent | Epikure H-30 | | | | | | 5 | | | |
| Workability | | Good | Good | Good | Good | Good | Good | Poor | Poor | Good |
| Odor | | Good | Good | Good | Good | Good | Good | Poor | Poor | Poor |
| Curability | | Good | Good | Good | Good | Good | Good | Good | Good | Poor |
| Storage stability | Storage at 50°C | A | A | A | A | A | A | C | C | A |

The waterproof material compositions of Examples generated neither fume and odor of asphalt nor solvent odor upon handling process. The compositions achieved low viscosity and satisfactory workability, sufficient room-temperature curability, and satisfactory storage stability. On the other hand, no compositions having a satisfactory balance between these properties were found in Comparative Example.

### (Examples 69 to 74 and Comparative Examples 19 to 21) : Comparison of performances as sealant compositions.

According to the compositions illustrated in Table 9, various blending materials were kneaded with a 5-L mixer to prepare the sealant compositions of Examples 69 to 74 and Comparative Examples 19 to 21.

The evaluation results obtained are illustrated in Table 9.

**[Table 9]**

| | | Example 69 | Example 70 | Example 71 | Example 72 | Example 73 | Example 74 | Comp. ex. 19 | Comp. ex. 20 | Comp. ex. 21 |
|---|---|---|---|---|---|---|---|---|---|---|
| (A) Component | Straight asphalt 1 | 90 | 90 | 90 | 90 | 90 | 90 | | | |
| (B) Components | Polymer I | 100 | | | | 70 | 100 | 100 | | |
| | Polymer B | | 100 | | | | | | 100 | |
| | Polymer F | | | 100 | | | | | | 100 |
| | Polymer G | | | | 100 | | | | | |
| (C) Components | Mesamol II | 50 | 25 | 25 | 50 | 50 | 50 | 50 | 25 | 25 |
| | HB-40 | | 25 | 25 | | | | | 25 | 25 |
| (D) Component | Epicoat 828 | | | | | | 10 | | | |
| (E) Component | Polymer H | | | | | 30 | | | | |
| (F) Component | PM-100 | 10 | 10 | 10 | 10 | 10 | 10 | 10 | 10 | 10 |
| (G) Components | A-171 | 1 | 1 | 1 | 1 | 1 | 1 | 1 | 1 | 1 |
| | A-1120 | 2 | 2 | 2 | 2 | 2 | | 2 | 2 | 2 |
| | A-187 | | | | | | 3 | | | |
| Filler | Calcium carbonate | 150 | 150 | 150 | 150 | 150 | 150 | 150 | 150 | 150 |
| Antioxidant | IRGANOX 245 | 1 | 1 | 1 | 1 | 1 | 1 | 1 | 1 | 1 |
| Ultraviolet absorber | TINUVIN 213 | 1 | 1 | 1 | 1 | 1 | 1 | 1 | 1 | 1 |
| Light stabilizer | SANOL LS765 | 1 | 1 | 1 | 1 | 1 | 1 | 1 | 1 | 1 |
| Curing catalyst | SCAT-1 | 1 | 1 | 1 | 1 | 1 | 1 | 1 | 1 | 1 |
| Epoxy resin curing agent | Epikure H-30 | | | | | | 5 | | | |
| Weather resistance | | B | B | B | B | A | B | C | C | C |
| Adhesiveness | | A | A | A | A | A | A | C | C | C |

The sealant compositions of Examples exhibited satisfactory water-resistant adhesiveness and weather resistance, but the compositions of Comparative Examples all failed in insufficient results.

### (Examples 75 to 80 and Comparative Examples 22 to 24): Comparison of performances as damping materials.

According to the compositions illustrated in Table 10, various blending materials were kneaded with a 5 L mixer to prepare the damping materials of Examples 75 to 80 and Comparative Examples 22 to 24.

The evaluation results obtained are illustrated in Table 10.

**[Table 10]**

| | | Example 75 | Example 76 | Example 77 | Example 78 | Example 79 | Example 80 | Comp. ex. 22 | Comp. ex. 23 | Comp. ex. 24 |
|---|---|---|---|---|---|---|---|---|---|---|
| (A) Components | Straight asphalt 1 | 140 | 140 | 140 | 140 | 140 | 140 | 100 | | 30 |
| | Blown asphalt | | | | | | | | 100 | 70 |
| (B) Components | Polymer I | 100 | | | | 70 | 100 | | | |
| | Polymer B | | 100 | | | | | | | |
| | Polymer F | | | 100 | | | | | | |
| | Polymer G | | | | 100 | | | | | |
| (C) Components | Mesamol II | 50 | 30 | 30 | 50 | 50 | 50 | | | |
| | HB-40 | | 20 | 20 | | | | | | |
| (D) Component | Epicoat 828 | | | | | | 10 | | | |
| (E) Component | Polymer H | | | | | 30 | | | | |
| (F) Component | PM-100 | 10 | 10 | 10 | 10 | 10 | 10 | | | |
| (G) Components | A-171 | 1 | 1 | 1 | 1 | 1 | 1 | | | |
| | A-1120 | 2 | 2 | 2 | 2 | 2 | | | | |
| | A-187 | | | | | | 3 | | | |
| Rubber component | SBR | | | | | | | 15 | 15 | 15 |
| Fillers | Calcium carbonate | 150 | 150 | 150 | 150 | 150 | 150 | 150 | 150 | 150 |
| | Talc | 50 | 50 | 50 | 50 | 50 | 50 | 50 | 50 | 50 |
| Curing catalyst | SCAT-1 | 1 | 1 | 1 | 1 | 1 | 1 | 1 | | |
| Epoxy resin curing agent | Epikure H-30 | | | | | | 5 | | | |
| Workability | | Good | Good | Good | Good | Good | Good | Poor | Poor | Poor |
| Odor | | Good | Good | Good | Good | Good | Good | Poor | Poor | Poor |
| Curability | | Good | Good | Good | Good | Good | Good | Good | Good | Good |
| Storage stability | | A | A | A | A | A | A | C | C | C |

The damping materials of Examples did not need to be melted by heating upon working therewith and are free from a problem involving thermal fluidity. And they exhibited low viscosity and satisfactory workability, sufficient room-temperature curability, and satisfactory storage stability.

### (Examples of Formulations for Road Pavement Materials)

Table 11 illustrates examples of formulations for road pavement materials using the curable compositions of the present invention.

**[Table 11]**

| | | | | | | | |
|---|---|---|---|---|---|---|---|
| (A) Component | Straight asphalt | 140 | 140 | 140 | 140 | 140 | 140 |
| (B) Components | Polymer I | 100 | | | | 70 | 100 |
| | Polymer B | | 100 | | | | |
| | Polymer F | | | 100 | | | |
| | Polymer G | | | | 100 | | |
| (C) Components | Mesamol II | 50 | 30 | 30 | 50 | 50 | 50 |
| | HB-40 | | 20 | 20 | | | |
| (D) Component | Epicoat 828 | | | | | | 10 |
| (E) Component | Polymer H | | | | | 30 | |
| (F) Component | PM-100 | 10 | 10 | 10 | 10 | 10 | 10 |
| (G) Components | A-171 | 1 | 1 | 1 | 1 | 1 | 1 |
| | A-1120 | 2 | 2 | 2 | 2 | 2 | |
| | A-187 | | | | | | 3 |
| Aggregate | | 200 | 200 | 200 | 200 | 200 | 200 |
| Curing catalyst | SCAT-1 | 1 | 1 | 1 | 1 | 1 | 1 |
| Epoxy resin curing agent | Epikure H-30 | | | | | | 5 |

## Claims

1. A curable composition, which comprises:
(A) a natural asphalt and/or a petroleum asphalt,
(B) a polyoxyalkylene polymer having one or more reactive silicon groups represented by the following general formula (1):
-Si(R¹₃₋ₐ)Xₐ (1)
in the formula, R¹ represents an alkyl group having 1 to 20 carbon atoms, an aryl group having 6 to 20 carbon atoms, an aralkyl group having 7 to 20 carbon atoms or a triorganosiloxy group represented by (R'O)₃Si-(wherein R' is a monovalent hydrocarbon group having 1 to 20 carbon atoms, and three R's may be the same or different) and they may be the same or different when two R¹s are present;
X represents a hydroxy group or a hydrolyzable group, and they may be the same or different when two or more Xs are present; and
a represents 1, 2 or 3
and (F) a tackifier resin, wherein component (F) is at least one member selected from the group consisting of petroleum resins, rosin ester resins, terpene-type resins, styrene resins, xylene resins, and phenol resins.

2. The curable composition according to claim 1, wherein the main chain skeleton of the (B) component is polyoxypropylene skeleton.

3. The curable composition according to claim 1 or 2,
wherein the introduction ratio (as determined by ¹H-NMR analysis) of the reactive silicon group to the molecular terminals of the (B) component is 60% or more, and the number average molecular weight (determined by GPC analysis, on the basis of polystyrene standard) of the (B) component is 5,000 or more.

4. The curable composition according to any one of claims 1 to 3, which further comprises:
(G) a silane coupling agent.

5. The curable composition according to claim 4, wherein the (G) component is a silane coupling agent containing one or more amino groups per molecule.

6. The curable composition according to claim 3, wherein the introduction ratio (as determined by ¹H-NMR analysis) of the reactive silicon group to the molecular terminals of the (B) component is 75% or more.

7. The curable composition according to claim 3, wherein the (B) component is a mixture composed of
- a reactive silicon group-containing polyoxyalkylene polymer having an introduction ratio (as determined by ¹H-NMR analysis) of the reactive silicon group to the molecular terminals thereof of 75% or more and less than 85% and
- a reactive silicon group-containing polyoxyalkylene polymer having an introduction ratio (as determined by ¹H-NMR analysis) of the reactive silicon group to the molecular terminals thereof of 85% or more.

8. The curable composition according to claim 3, wherein the introduction ratio (as determined by ¹H-NMR analysis) of the reactive silicon group to the molecular terminals of the (B) component is 85% or more.

9. The curable composition according to claim 3, wherein the number average molecular weight (determined by GPC analysis on the basis of polystyrene standard) of the (B) component is 10,000 or more.

10. The curable composition according to any one of claims 1 to 9,
wherein the (B) component has one or more reactive silicon groups represented by the following general formula (2) and/or the following general formula (3):
-Si(R¹)X₂ (2)
in the formula, R¹ and X are the same as described above, and
-SiX₃ (3)
in the formula, X is the same as described above.

11. The curable composition according to any one of claims 1 to 10,
wherein the (B) component has one or more functional groups represented by the following general formula (4):
-NR²-C(=O)- (4)
in the formula, R² is a hydrogen atom, an alkyl group having 1 to 20 carbon atoms, an aryl group having 6 to 20 carbon atoms, or an aralkyl group having 7 to 20 carbon atoms.

12. The curable composition according to claim 11, wherein the (B) component has at least two functional groups represented by the general formula (4) per molecule.

13. The curable composition according to any one of claims 1 to 12, which comprises:
(C) a plasticizer.

14. The curable composition according to claim 13,
wherein the (C) component plasticizer is an aromatic oligomer or a completely or partially hydrogenated product of an aromatic oligomer.

15. The curable composition according to claim 13,
wherein the (C) component plasticizer is a sulfonate compound or a sulfonamide compound.

16. The curable composition according to any one of claims 1 to 15, which comprises:
(D) an epoxy resin.

17. The curable composition according to claim 16, wherein the content of the (D) component epoxy resin is 5 to 120 parts by weight in relation to 100 parts by weight of the (A) component.

18. The curable composition according to any one of claims 1 to 17, which comprises:
(E) an alkyl (meth)acrylate polymer.

19. The curable composition according to claim 18, wherein the molecular chain of the (E) component alkyl (meth)acrylate polymer is a copolymer chain comprising:
- (a) an alkyl (meth) acrylate monomer unit having an alkyl group containing 1 to 8 carbon atoms and
- (b) an alkyl (meth)acrylate monomer unit having an alkyl group containing 10 or more carbon atoms.

20. The curable composition according to claim 18 or 19,
wherein the (E) component alkyl (meth)acrylate polymer is a polymer having one or more reactive silicon groups represented by the above described general formula (1).

21. The curable composition according to any one of claims 1 to 20,
wherein the tackifier resin (F) is a tackifier resin modified with phenol and/or an alkylphenol.

22. The curable composition according to any one of claims 1 to 21,
wherein
- the content of the (A) component is 30 to 60 parts by weight,
- the content of the (B) components is 25 to 55 parts by weight,
- the content of the (C) component is 15 to 50 parts by weight, and
- the content of the (F) component is 1 to 30 parts by weight,
based on 100 parts by weight of the sum of the contents of the (A), (B), (C) and (F) components.

23. The curable composition according to any one of claims 1 to 22,
wherein the content of asphaltene is 10 parts by weight or less per 100 parts by weight of the (A) component.

24. The curable composition according to any one of claims 1 to 23,
wherein a 3-mm thick sheet specimen obtainable by curing said curable composition at 23°C for 3 days and then at 50°C for 4 days has tensile strength at break of 0.4 MPa or more and an elongation at break of 50% or more measured in a tensile test according to JIS K 6251.

25. A one-component curable composition, which comprises:
the curable composition according to any one of claims 1 to 24.

26. An adhesive for tiles, which comprises:
the curable composition according to any one of claims 1 to 25.

27. A waterproof material, which comprises:
the curable composition according to any one of claims 1 to 25.

28. A road pavement material, which comprises:
the curable composition according to any one of claims 1 to 25.

29. A sealant, which comprises:
the curable composition according to any one of claims 1 25.

30. A damping material, which comprises:
the curable composition according to any one of claims 1 to 25.

## Patentansprüche

1. Eine härtbare Zusammensetzung, welche umfasst:
(A) einen Naturasphalt und/oder einen Petrolasphalt,
(B) ein Polyoxyalkylenpolymer mit einem oder mehreren reaktiven Siliciumresten, dargestellt durch die folgende allgemeine Formel (1):
-Si(R¹₃₋ₐ)Xₐ (1)
in der Formel bedeutet R¹ einen Alkylrest mit 1 bis 20 Kohlenstoffatomen, einen Arylrest mit 6 bis 20 Kohlenstoffatomen, einen Aralkylrest mit 7 bis 20 Kohlenstoffatomen oder einen Triorganosiloxyrest, dargestellt durch (R'O)₃Si- (wobei R' ein einwertiger Kohlenwasserstoffrest mit 1 bis 20 Kohlenstoffatomen ist und drei R' gleich oder verschieden sein können) und sie können gleich oder verschieden sein, wenn zwei R¹ vorliegen; und
X bedeutet eine Hydroxygruppe oder einen hydrolysierbaren Rest und sie können gleich oder verschieden sein, wenn zwei oder mehr X vorliegen; und
a bedeutet 1, 2 oder 3,
und (F) ein klebrigmachendes Harz, wobei Komponente (F) mindestens ein Mitglied, ausgewählt aus der Gruppe bestehend aus Erdölharzen, Kolophoniumesterharzen, Harzen vom Terpen-Typ, Styrolharzen, Xylolharzen und Phenolharzen, ist.

2. Die härtbare Zusammensetzung nach Anspruch 1,
wobei das Hauptkettengerüst der Komponente (B) ein Polyoxypropylengerüst ist.

3. Die härtbare Zusammensetzung nach Anspruch 1 oder 2,
wobei das Einbringungsverhältnis (wie anhand von ¹H-NMR-Analyse bestimmt) des reaktiven Siliciumrests zu den Molekülenden der Komponente (B) 60% oder mehr beträgt und das Zahlenmittel des Molekulargewichts (bestimmt durch GPC-Analyse auf Polystyrol-Standard-Basis) der Komponente (B) 5.000 oder mehr beträgt.

4. Die härtbare Zusammensetzung nach einem der Ansprüche 1 bis 3, welche weiter umfasst:
(G) ein Silankupplungsmittel.

5. Die härtbare Zusammensetzung nach Anspruch 4,
wobei die Komponente (G) ein Silankupplungsmittel ist, das eine oder mehrere Aminogruppen pro Molekül enthält.

6. Die härtbare Zusammensetzung nach Anspruch 3,
wobei das Einbringungsverhältnis (wie anhand von ¹H-NMR-Analyse bestimmt) des reaktiven Siliciumrests zu den Molekülenden der Komponente (B) 75% oder mehr beträgt.

7. Die härtbare Zusammensetzung nach Anspruch 3,
wobei die Komponente (B) ein Gemisch ist, das aus
- einem einen reaktiven Siliciumrest enthaltenden Polyoxyalkylenpolymer mit einem Einbringungsverhältnis (wie anhand von ¹H-NMR-Analyse bestimmt) des reaktiven Siliciumrests zu den Molekülenden desselben von 75% oder mehr und weniger als 85% und
- einem einen reaktiven Siliciumrest enthaltenden Polyoxyalkylenpolymer mit einem Einbringungsverhältnis (wie anhand von ¹H-NMR-Analyse bestimmt) des reaktiven Siliciumrests zu den Molekülenden desselben von 85% oder mehr zusammengesetzt ist.

8. Die härtbare Zusammensetzung nach Anspruch 3,
wobei das Einbringungsverhältnis (wie anhand von ¹H-NMR-Analyse bestimmt) des reaktiven Siliciumrests zu den Molekülenden der Komponente (B) 85% oder mehr beträgt.

9. Die härtbare Zusammensetzung nach Anspruch 3,
wobei das Zahlenmittel des Molekulargewichts (bestimmt anhand von GPC-Analyse auf Polystyrol-Standard-Basis) der Komponente (B) 10.000 oder mehr beträgt.

10. Die härtbare Zusammensetzung nach einem der Ansprüche 1 bis 9,
wobei die Komponente (B) einen oder mehrere reaktive Siliciumreste, dargestellt durch die folgende allgemeine Formel (2) und/oder die folgende allgemeine Formel (3), aufweist:
-Si(R¹)X₂ (2)
in der Formel sind R¹ und X wie vorstehend beschrieben, und
-SiX₃ (3)
in der Formel ist X wie vorstehend beschrieben.

11. Die härtbare Zusammensetzung nach einem der Ansprüche 1 bis 10,
wobei die Komponente (B) eine oder mehrere funktionelle Gruppen, dargestellt durch die folgende allgemeine Formel (4), aufweist:
-NR²-C(=O)- (4)
in der Formel ist R² ein Wasserstoffatom, ein Alkylrest mit 1 bis 20 Kohlenstoffatomen, ein Arylrest mit 6 bis 20 Kohlenstoffatomen oder ein Aralkylrest mit 7 bis 20 Kohlenstoffatomen.

12. Die härtbare Zusammensetzung nach Anspruch 11, wobei die Komponente (B) mindestens zwei funktionelle Gruppen, dargestellt durch die allgemeine Formel (4), pro Molekül aufweist.

13. Die härtbare Zusammensetzung nach einem der Ansprüche 1 bis 12, welche umfasst:
(C) einen Weichmacher.

14. Die härtbare Zusammensetzung nach Anspruch 13,
wobei die Weichmacher-Komponente (C) ein aromatisches Oligomer oder ein vollständig oder teilweise hydriertes Produkt eines aromatischen Oligomers ist.

15. Die härtbare Zusammensetzung nach Anspruch 13,
wobei die Weichmacher-Komponente (C) eine Sulfonatverbindung oder eine Sulfonamidverbindung ist.

16. Die härtbare Zusammensetzung nach einem der Ansprüche 1 bis 15, welche umfasst:
(D) ein Epoxyharz.

17. Die härtbare Zusammensetzung nach Anspruch 16,
wobei der Gehalt der Epoxyharz-Komponente (D) 5 bis 120 Gewichtsteile, bezogen auf 100 Gewichtsteile der Komponente (A), beträgt.

18. Die härtbare Zusammensetzung nach einem der Ansprüche 1 bis 17, welche umfasst:
(E) ein Alkyl(meth)acrylatpolymer.

19. Die härtbare Zusammensetzung nach Anspruch 18,
wobei die Molekülkette der Alkyl(meth)acrylatpolymer-Komponente (E) eine Copolymerkette ist, die umfasst:
- (a) eine Alkyl(meth)acrylat-Monomereinheit mit einem Alkylrest, der 1 bis 8 Kohlenstoffatome enthält, und
- (b) eine Alkyl(meth)acrylat-Monomereinheit mit einem Alkylrest, der 10 oder mehr Kohlenstoffatome enthält.

20. Die härtbare Zusammensetzung nach Anspruch 18 oder 19,
wobei die Alkyl(meth)acrylatpolymer-Komponente (E) ein Polymer mit einem oder mehreren reaktiven Siliciumresten, dargestellt durch die vorstehend beschriebene allgemeine Formel (1), ist.

21. Die härtbare Zusammensetzung nach einem der Ansprüche 1 bis 20,
wobei das klebrigmachende Harz (F) ein klebrigmachendes Harz ist, das mit Phenol und/oder einem Alkylphenol modifiziert ist.

22. Die härtbare Zusammensetzung nach einem der Ansprüche 1 bis 21, wobei
- der Gehalt der Komponente (A) 30 bis 60 Gewichtsteile beträgt,
- der Gehalt der Komponente (B) 25 bis 55 Gewichtsteile beträgt,
- der Gehalt der Komponente (C) 15 bis 50 Gewichtsteile beträgt und
- der Gehalt der Komponente (F) 1 bis 30 Gewichtsteile beträgt,
bezogen auf 100 Gewichtsteile der Summe der Gehalte der Komponenten (A), (B), (C) und (F).

23. Die härtbare Zusammensetzung nach einem der Ansprüche 1 bis 22,
wobei der Gehalt an Asphalten 10 Gewichtsteile oder weniger pro 100 Gewichtsteile der Komponente (A) beträgt.

24. Die härtbare Zusammensetzung nach einem der Ansprüche 1 bis 23,
wobei eine 3 mm dicke Folienprobe, erhältlich durch Härten der härtbaren Zusammensetzung bei 23°C für 3 Tage und dann bei 50°C für 4 Tage, eine Reißfestigkeit von 0,4 MPa oder mehr und eine Bruchdehnung von 50% oder mehr, gemessen bei einem Zugversuch gemäß JIS K 6251, aufweist.

25. Eine härtbare Einkomponentenzusammensetzung, welche umfasst:
die härtbare Zusammensetzung nach einem der Ansprüche 1 bis 24.

26. Ein Kleber für Fliesen, welcher umfasst:
die härtbare Zusammensetzung nach einem der Ansprüche 1 bis 25.

27. Ein wasserfestes Material, welches umfasst:
die härtbare Zusammensetzung nach einem der Ansprüche 1 bis 25.

28. Ein Straßenbelag, welcher umfasst:
die härtbare Zusammensetzung nach einem der Ansprüche 1 bis 25.

29. Ein Dichtungsmittel, welches umfasst:
die härtbare Zusammensetzung nach einem der Ansprüche 1 bis 25.

30. Ein Dämpfungsmaterial, welches umfasst:
die härtbare Zusammensetzung nach einem der Ansprüche 1 bis 25.

## Revendications

1. Composition durcissable, qui comprend :
(A) un bitume naturel et/ou un bitume pétrolier,
(B) un polymère de polyoxyalkylène ayant un ou plusieurs groupes silicium réactifs représentés par la formule générale (1) suivante :
-Si(R¹₃₋ₐ)Xₐ (1)
dans la formule, R¹ représente un groupe alkyle ayant de 1 à 20 atomes de carbone, un groupe aryle ayant de 6 à 20 atomes de carbone, un groupe aralkyle ayant de 7 à 20 atomes de carbone ou un groupe triorganosiloxy représenté par (R'O)₃Si- (où R' est un groupe hydrocarboné monovalent ayant de 1 à 20 atomes de carbone et les trois R' peuvent être identiques ou différents) et lorsque deux groupes R¹ sont présents, ils peuvent être identiques ou différents ;
X représente un groupe hydroxy ou un groupe hydrolysable, et lorsque deux groupes X ou plus sont présents, ils peuvent être identiques ou différents ; et
a représente 1, 2 ou 3 ;
et (F) une résine adhésive dans laquelle le composant (F) est au moins un élément choisi dans le groupe constitué par les résines pétrolières, les résines d'ester de colophane, les résines de type terpène, les résines de styrène, les résines de xylène, et les résines phénoliques.

2. Composition durcissable selon la revendication 1,
dans laquelle le squelette de la chaîne principale du composant (B) est un squelette de polyoxypropylène.

3. Composition durcissable selon la revendication 1 ou 2,
dans laquelle le rapport d'introduction (tel que déterminé par analyse RMN ¹H) du groupe silicium réactif aux extrémités moléculaires du composant (B) est de 60 % ou plus, et le poids moléculaire moyen en nombre (déterminé par analyse GPC, en fonction de l'étalon de polystyrène) du composant (B) est de 5000 ou plus.

4. Composition durcissable selon l'une quelconque des revendications 1 à 3, qui comprend en outre :
(G) un agent de couplage de silane.

5. Composition durcissable selon la revendication 4,
dans laquelle le composant (G) est un agent de couplage de silane contenant un ou plusieurs groupes amino par molécule.

6. Composition durcissable selon la revendication 3,
dans laquelle le rapport d'introduction (tel que déterminé par analyse RMN ¹H) du groupe silicium réactif aux extrémités moléculaires du composant (B) est de 75 % ou plus.

7. Composition durcissable selon la revendication 3,
dans laquelle le composant (B) est un mélange se composant de
- un polymère de polyoxyalkylène contenant un groupe silicium réactif ayant un rapport d'introduction (tel que déterminé par analyse RMN ¹H) du groupe silicium réactif aux extrémités moléculaires de celui-ci de 75 % ou plus et de moins de 85 % ; et
- un polymère de polyoxyalkylène contenant un groupe silicium réactif ayant un rapport d'introduction (déterminé par analyse RMN ¹H) du groupe silicium réactif aux extrémités moléculaires de celui-ci de 85 % ou plus.

8. Composition durcissable selon la revendication 3,
dans laquelle le rapport d'introduction (tel que déterminé par analyse RMN ¹H) du groupe silicium réactif aux extrémités moléculaires du composant (B) est de 85 % ou plus.

9. Composition durcissable selon la revendication 3,
dans laquelle le poids moléculaire moyen en nombre (déterminé par analyse GPC, en fonction de l'étalon de polystyrène) du composant (B) est de 10 000 ou plus.

10. Composition durcissable selon l'une quelconque des revendications 1 à 9,
dans laquelle le composant (B) comprend un ou plusieurs groupes silicium réactifs représentés par la formule générale (2) suivante et/ou par la formule générale (3) suivante :
-Si(R¹)X₂ (2)
dans la formule, R¹ et X sont tels que décrits ci-dessus, et
-SiX₃ (3)
dans la formule, X est tel que décrit ci-dessus.

11. Composition durcissable selon l'une quelconque des revendications 1 à 10, dans laquelle le composant (B) comprend un ou plusieurs groupes fonctionnels représentés par la formule générale (4) suivante :
-NR²-C(=O)- (4)
dans la formule, R² est un atome d'hydrogène, un groupe alkyle ayant de 1 à 20 atomes de carbone, un groupe aryle ayant de 6 à 20 atomes de carbone ou un groupe aralkyle ayant de 7 à 20 atomes de carbone.

12. Composition durcissable selon la revendication 11,
dans laquelle le composant (B) comprend au moins deux groupes fonctionnels représentés par la formule générale (4) par molécule.

13. Composition durcissable selon l'une quelconque des revendications 1 à 12, qui comprend :
(C) un agent plastifiant.

14. Composition durcissable selon la revendication 13,
dans laquelle le composant agent plastifiant (C) est un oligomère aromatique ou un produit totalement ou partiellement hydrogéné d'un oligomère aromatique.

15. Composition durcissable selon la revendication 13,
dans laquelle le composant agent plastifiant (C) est un composé sulfonate ou un composé sulfonamide.

16. Composition durcissable selon l'une quelconque des revendications 1 à 15, qui comprend :
(D) une résine époxy.

17. Composition durcissable selon la revendication 16,
dans laquelle la teneur en composant résine époxy (D) est de 5 à 120 parties en poids par rapport à 100 parties en poids du composant (A).

18. Composition durcissable selon l'une quelconque des revendications 1 à 17, qui comprend :
(E) un polymère de (méth)acrylate d'alkyle.

19. Composition durcissable selon la revendication 18, dans laquelle la chaîne moléculaire du composant polymère de (méth)acrylate d'alkyle (E) est une chaîne de copolymère comprenant :
- (a) un motif monomère de (méth)acrylate d'alkyle ayant un groupe alkyle contenant de 1 à 8 atomes de carbone et
- (b) un motif monomère de (méth)acrylate d'alkyle ayant un groupe alkyle contenant 10 atomes de carbone ou plus.

20. Composition durcissable selon la revendication 18 ou 19,
dans laquelle le composant polymère de (méth)acrylate d'alkyle (E) est un polymère ayant un ou plusieurs groupes silicium réactifs représentés par la formule générale (1) décrite ci-dessus.

21. Composition durcissable selon l'une quelconque des revendications 1 à 20, dans laquelle la résine adhésive (F) est une résine adhésive modifiée par un phénol et/ou un alkylphénol.

22. Composition durcissable selon l'une quelconque des revendications 1 à 21, dans laquelle
- la teneur en composant (A) est de 30 à 60 parties en poids,
- la teneur en composant (B) est de 25 à 55 parties en poids,
- la teneur en composant (C) est de 15 à 50 parties en poids, et
- la teneur en composant (F) est de 1 à 30 parties en poids,
sur la base de 100 parties en poids de la somme des teneurs des composants (A), (B), (C) et (F).

23. Composition durcissable selon l'une quelconque des revendications 1 à 22, dans laquelle la teneur en asphaltène est de 10 parties en poids ou moins pour 100 parties en poids du composant (A).

24. Composition durcissable selon l'une quelconque des revendications 1 à 23, dans laquelle un échantillon de film de 3 mm d'épaisseur pouvant être obtenu par durcissement de ladite composition durcissable à 23 °C pendant 3 jours et ensuite à 50 °C pendant 4 jours a une force de traction à la rupture de 0,4 MPa ou plus et une élongation à la rupture de 50 % ou plus, mesurées dans un test de traction selon la norme JIS K 6251.

25. Composition durcissable à un seul composant, qui comprend :
la composition durcissable selon l'une quelconque des revendications 1 à 24.

26. Adhésif pour carreaux, qui comprend :
la composition durcissable selon l'une quelconque des revendications 1 à 25.

27. Matériau imperméable à l'eau, qui comprend :
la composition durcissable selon l'une quelconque des revendications 1 à 25.

28. Matériau de revêtement de chaussée, qui comprend :
la composition durcissable selon l'une quelconque des revendications 1 à 25.

29. Agent d'étanchéité, qui comprend :
la composition durcissable selon l'une quelconque des revendications 1 à 25.

30. Matériau amortissant, qui comprend :
la composition durcissable selon l'une quelconque des revendications 1 à 25.
